(19) Europäisches Patentamt
European Patent Office
Office européen des brevets

(11) **EP 4 105 098 B1**

(12) **EUROPEAN PATENT SPECIFICATION**

(45) Date of publication and mention
of the grant of the patent:
**25.09.2024  Bulletin 2024/39**

(51) International Patent Classification (IPC):
**B61F 5/24** (2006.01)        **G01M 17/10** (2006.01)

(52) Cooperative Patent Classification (CPC):
**G01M 17/10; B61F 5/245**

(21) Application number: **21753205.0**

(22) Date of filing: **05.02.2021**

(86) International application number:
**PCT/JP2021/004321**

(87) International publication number:
**WO 2021/161916 (19.08.2021 Gazette 2021/33)**

(54) **OPERATION STATE DIAGNOSTIC DEVICE**

DIAGNOSEVORRICHTUNG FÜR BETRIEBSZUSTAND

DISPOSITIF DE DIAGNOSTIC D'ÉTAT DE FONCTIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2020   JP 2020020837**

(43) Date of publication of application:
**21.12.2022   Bulletin 2022/51**

(73) Proprietor: **Hitachi Astemo, Ltd.
Hitachinaka-shi, Ibaraki 312-8503 (JP)**

(72) Inventors:
• **RI, Tomoyuki
Hitachinaka-shi, Ibaraki 312-8503 (JP)**
• **HIRAO, Ryusuke
Hitachinaka-shi, Ibaraki 312-8503 (JP)**
• **ICHIMARU, Nobuyuki
Hitachinaka-shi, Ibaraki 312-8503 (JP)**

(74) Representative: **Hoffmann Eitle
Patent- und Rechtsanwälte PartmbB
Arabellastraße 30
81925 München (DE)**

(56) References cited:
WO-A1-2019/065434        CN-A- 104 155 968
CN-A- 104 155 968        CN-A- 106 096 096
JP-A- 2005 067 276        JP-A- 2005 067 276
JP-A- 2006 160 153        JP-A- 2014 210 507
JP-A- 2017 144 909        JP-A- 2017 144 909

## Description

TECHNICAL FIELD

The present disclosure relates to an operation state diagnostic device which diagnoses a shock absorber arranged, for example, between a vehicle body and a bogie of a railway vehicle.

BACKGROUND ART

There is known a vehicle in which shock absorbers are arranged between bogies and a vehicle body in order to increase ride comfort of a railway vehicle. For example, in Patent Literature 1, there is described a technology of arranging yaw dampers serving as shock absorbers between a vehicle body and bogies of a railway vehicle, to thereby suppress bending vibration of the vehicle body while suppressing vibration of the bogies.

The shock absorber contributes to an increase in ride comfort of crews and passengers, and hence it is desired to be able to diagnose an abnormality thereof before an operation of the railway vehicle or during the operation thereof. For example, in Patent Literature 2, there is described a technology of detecting both of vibration of bogies and vibration of wheelsets, to thereby detect a track abnormality and a bogie abnormality based on vibration values of the bogies and vibration values of the wheelsets. In Patent Literature 3, there is described a technology of vibrating a railway vehicle in a stop state, to thereby diagnose an abnormality. In Patent Literature 4, there is described a technology of detecting an acceleration in a vertical direction and an acceleration in a pitching direction, and detecting an abnormality of a shock absorber from a phase difference between a vertical translation and a pitching.

CITATION LIST

PATENT LITERATURE

PTL 1: JP 2014-198522 A
PTL 2: JP 2004-170080 A (JP 3779258 B2)
PTL 3: JP 2019-27874 A
PTL 4: JP 2012-111480 A (JP 5662298 B2)

JP 2005 067276 A relates to an apparatus which detects the abnormality of a rail vehicle, specifically by detecting vibration data during traveling/driving of a rail vehicle. A vehicle state database is referred during traveling/driving of the vehicle. An estimation coefficient adjustment means is used. By adjusting an estimation gain and a vehicle model parameter according to a running status, the estimation precision by the estimation means is improved. Thereby, an incorrect detection is decreased.

JP 2017 144909 A relates to a method and a device for detecting abnormality of a secondary spring system provided between a body of a railway car and a truck, and more particularly to a method and a device for detecting abnormality of a secondary spring system .

CN 104 155 968 A discloses a kind of small fault diagnostic method for bullet train suspension system actuator, and particularly relates to the detection and the method for estimation of a closed-loop control system small fault based on a failure message whole step amount residual error.

SUMMARY OF INVENTION

TECHNICAL PROBLEM

In the case of the related art, in order to highly accurately determine an abnormality of a shock absorber, additional sensors may be required in addition to existing sensors.

SOLUTION TO PROBLEM

An object of one embodiment of the present invention is to provide an operation state diagnostic device capable of increasing an accuracy of determination of an abnormality while suppressing an addition of sensors (measurement means).

According to one embodiment of the present invention, there is provided an operation state diagnostic device for a shock absorber arranged between a vehicle body and a bogie of a railway vehicle, the operation state diagnostic device including: a position detection unit configured to obtain a travel position of the railway vehicle to output the travel position; a pressure measurement unit configured to measure a pressure value of pressure loaded on a spring mechanism provided between the vehicle body and the bogie to output the pressure value; a spring mechanism displacement calculation unit configured to calculate a vertical displacement of the spring mechanism through use of the pressure value of the spring mechanism output from the pressure measurement unit to output the vertical displacement; a spring mechanism displacement estimation unit which is arranged on the railway vehicle, and is configured to estimate the vertical displacement of the spring mechanism through use of a railway vehicle model obtained by modeling the railway vehicle, the travel position, and the pressure value of the spring mechanism to output the vertical displacement; and a shock absorber abnormality determination unit configured to determine an abnormality of the shock absorber by comparing a calculation value of the vertical displacement of the spring mechanism output from the spring mechanism displacement calculation unit and an estimation value of the vertical displacement of the spring mechanism output from the spring mechanism displacement estimation unit with each other.

Further, according to one embodiment of the present invention, there is provided an operation state diagnostic device for a shock absorber arranged between a vehicle body and a bogie of a railway vehicle, the operation state diagnostic device including: a vehicle body acceleration measurement unit configured to measure a vertical acceleration of the vehicle body to output the vertical acceleration; a position detection unit configured to obtain a travel position of the railway vehicle to output the travel position; a pressure measurement unit configured to measure a pressure value of pressure loaded on a spring mechanism provided between the vehicle body and the bogie to output the pressure value; a vehicle body acceleration estimation unit which is arranged on the railway vehicle, and is configured to estimate the vertical acceleration of the vehicle body through use of a railway vehicle model obtained by modeling the railway vehicle, the travel position, and the pressure value of the spring mechanism to output the vertical acceleration; and a shock absorber abnormality determination unit configured to determine an abnormality of the shock absorber by comparing a measurement value of the vertical acceleration of the vehicle body output from the vehicle body acceleration measurement unit and an estimation value of the vertical acceleration of the vehicle body output from the vehicle body acceleration estimation unit with each other.

According to one embodiment of the present invention, it is possible to increase the accuracy of determination of the abnormality while suppressing the addition of measurement means (sensors).

BRIEF DESCRIPTION OF DRAWINGS

Fig. 1 is a side view for schematically illustrating a railway vehicle to which an operation state diagnostic device according to a first embodiment of the present invention and shock absorbers (conventional dampers) are mounted.
Fig. 2 is a block diagram for illustrating the diagnostic device of Fig. 1.
Fig. 3 is a flowchart for illustrating control processing executed by the diagnostic device of Fig. 1.
Fig. 4 is a flowchart for illustrating control processing executed by the diagnostic device according to a first modification example.
Fig. 5 is a flowchart for illustrating control processing executed by the diagnostic device according to a second modification example.
Fig. 6 is a flowchart for illustrating control processing executed by the diagnostic device according to a third modification example.
Fig. 7 is a flowchart for illustrating control processing executed by the diagnostic device according to a fourth modification example.
Fig. 8 is a flowchart for illustrating control processing executed by the diagnostic device according to a fifth modification example.

Fig. 9 is a flowchart for illustrating control processing executed by the diagnostic device according to a sixth modification example.
Fig. 10 is a side view for schematically illustrating a railway vehicle to which an operation state diagnostic device according to a second embodiment of the present invention and shock absorbers (semi-active dampers) are mounted.
Fig. 11 is a plan view for schematically illustrating a positional relationship among a vehicle body, bogies, the shock absorbers, acceleration sensors, and the like of Fig. 10.
Fig. 12 is a block diagram for illustrating a control device of Fig. 10.
Fig. 13 is a flowchart for illustrating control processing executed by the control device of Fig. 10.
Fig. 14 is a flowchart for illustrating control processing executed by the control device in a seventh modification example.
Fig. 15 is a flowchart for illustrating control processing executed by the control device in an eighth modification example.
Fig. 16 is a flowchart for illustrating control processing executed by the control device in a ninth modification example.
Fig. 17 is a flowchart for illustrating control processing executed by the control device in a tenth modification example.
Fig. 18 is a flowchart for illustrating control processing executed by the control device in an eleventh modification example.
Fig. 19 is a flowchart for illustrating control processing executed by the control device in a twelfth modification example.

DESCRIPTION OF EMBODIMENTS

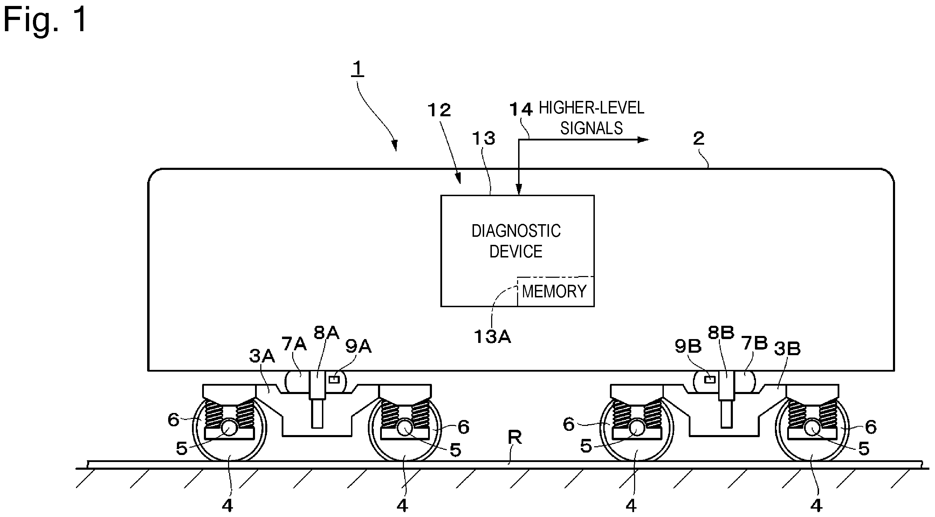

Description is now given of an operation state diagnostic device according to embodiments of the present invention with reference to the accompanying drawings by giving, as an example, a case in which the operation state diagnostic device is mounted to a railway vehicle, such as an electric railcar, a diesel railcar, or a passenger railcar. In flowcharts of the drawings, a notation of "S" is used for each step (for example, Step 1="S1"). Moreover, in Fig. 1, Fig. 10, and Fig. 11, description is given while assuming that a left side (one side in a length direction of the train) of the drawings is a front side in a travel direction of the railway vehicle, and a right side (another side in the length direction of the train) of the drawings is a rear side in the travel direction of the railway vehicle. However, the right side of the drawings may be the front side, and the left side of the drawings may be the rear side.

Fig. 1 to Fig. 3 show a first embodiment of the present invention. In Fig. 1, a railway vehicle 1 (hereinafter referred to as "vehicle 1") includes a vehicle body 2 on which occupants such as passengers and crews are to ride, and a bogie 3A on the front side and a bogie 3B on the rear side, which are provided on a lower side of the vehicle body 2. Those two bogies 3A and 3B are arranged apart from each other on the front side (the one side in the length direction of the vehicle body 2 and the left side of Fig. 1) and the rear side (the another side in the length direction of the vehicle body 2 and the right side of Fig. 1) of the vehicle body 2, respectively. As a result, the vehicle body 2 of the vehicle 1 is installed on the pair of bogies 3A and 3B. In Fig. 1, in order to avoid complication of the drawing, one vehicle 1, that is, a train with a single-car formation, is illustrated. However, in general, a train formed by connecting a plurality of vehicles 1 to each other, that is, a train formed of the plurality of vehicles 1, is in operation.

To each of the bogies 3A and 3B, two wheelsets 6, 6 each formed by providing a wheel 4, 4 on each of both end sides in a length direction of an axle 5, 5 (that is, both end sides in a width direction of the vehicle body 2) are mounted apart from each other in the front-rear direction. As a result, four wheels 4, 4 are provided to each of the bogies 3A and 3B. The vehicle 1 travels along left and right rails R (only one side thereof is illustrated in Fig. 1) through rotation of the wheels 4, 4 on the rails R. A left-right direction being the width direction of the vehicle body 2 is set with respect to a direction orthogonal to the travel direction as a reference. That is, the left-right direction corresponds to the width direction of the vehicle body 2 (axial direction of the axles 5, 5). For example, in Fig. 1, a front side in a front-back direction orthogonal to the drawing sheet is left, and a back side in the front-back direction is right.

Between the vehicle body 2 of the vehicle 1 and the bogies 3A and 3B, there are provided a plurality of air springs 7A and 7B which elastically support the vehicle body 2 on the bogies 3A and 3B and a plurality of dampers 8A and 8B which are arranged to form a parallel relationship with the air springs 7A and 7B, respectively. The air springs 7A and 7B are also called as "bolster springs" or "suspension springs," and correspond to "secondary springs" provided between the vehicle body 2 and the like forming "sprung masses" and the bogies 3A and 3B and the like forming "masses between primary springs and secondary springs." That is, the air springs 7A and 7B form spring mechanisms provided between the vehicle body 2 and the bogies 3A and 3B. The "primary springs" correspond to axle springs (not shown) provided on the bogies 3A and 3B, that is, axle springs provided between the wheels 4, 4 (wheelsets 6, 6) forming "unsprung masses" and bogie frames of the bogies 3A and 3B forming "masses between primary springs and secondary springs." One of the air springs 7A and 7B is provided, for example, on each of the left and right sides of each of the bogies 3A and 3B. That is, two air springs 7A or 7B are provided on one bogie, and four air springs 7A and 7B are provided on one vehicle.

The dampers 8A and 8B serving as the shock absorbers are arranged between the vehicle body 2 and the bogies 3A and 3B of the vehicle 1. Each of the dampers 8A and 8B is, for example, a hydraulic shock absorber formed as a conventional damper (passive damper) having a damping force which changes depending on a stroke speed. The dampers 8A and 8B form, together with the air springs 7A and 7B, suspensions which absorb (damp) vibration in a vertical direction between the vehicle body 2 and the bogies 3A and 3B. That is, the dampers 8A and 8B serving as vertical dampers generate damping forces for reducing vibration in the vertical direction of the vehicle body 2 with respect to the bogies 3A and 3B, respectively. As a result, the dampers 8A and 8B reduce (suppress) the vibration of the vehicle body 2 in the vertical direction. The dampers 8A and 8B are arranged, for example, in parallel to the air springs 7A and 7B, respectively. One of the dampers 8A and 8B is provided on each of the left and right sides of each of the bogies 3A and 3B, respectively. That is, two dampers 8A or 8B are provided on one bogie, and four dampers 8A and 8B are provided on one vehicle.

The pressure sensors 9A and 9B are provided to the air springs 7A and 7B, respectively. The pressure sensors 9A and 9B detect pressures (internal pressures) of the air springs 7A and 7B, respectively. Pressure values measured by the pressure sensors 9A and 9B are used to control, for example, the air springs 7A and 7B. Thus, the pressure sensors 9A and 9B are connected to a control device (not shown), for example, a control device for controlling the air springs 7A and 7B or a higher-level control device. Moreover, the pressure values measured by the pressure sensors 9A and 9B are used to diagnose operation states of the dampers 8A and 8B as described later. Thus, the pressure sensors 9A and 9B are connected to a diagnostic device 13 via the control device (not shown) and a communication line 14. That is, signals corresponding to the pressures measured by the pressure sensors 9A and 9B are output to the diagnostic device 13 via the control device (not shown) and the communication line 14. As a result, the pressure sensors 9A and 9B form a pressure measurement unit configured to measure (detect) the pressure values of pressure loaded on the air springs 7A and 7B, and to output the signals corresponding to those pressure values to the diagnostic device 13.

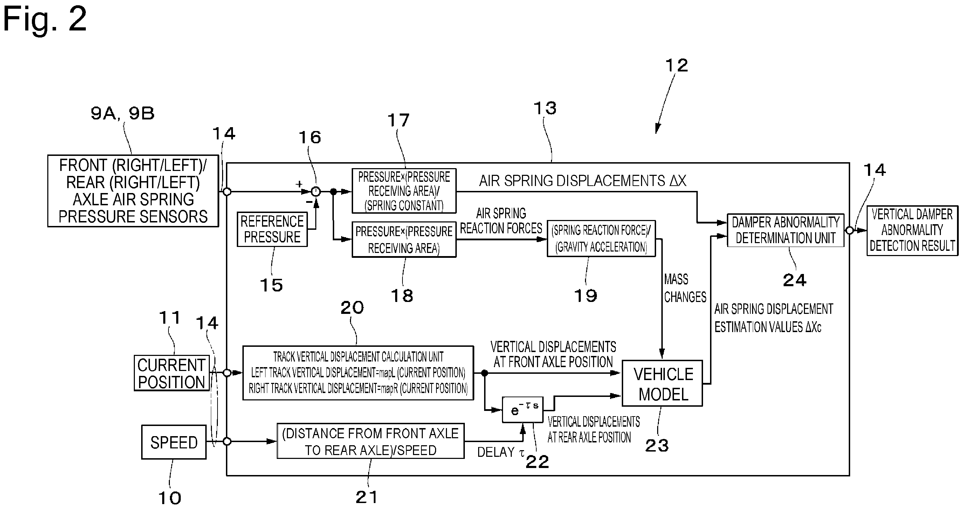

As illustrated in Fig. 2, in addition to the pressure sensors 9A and 9B, a vehicle speed sensor 10 and a position sensor 11 are provided to the vehicle 1. The vehicle speed sensor 10 detects a travel speed (vehicle speed) of the vehicle 1. The vehicle speed sensor 10 is connected to the control device (not shown), for example, the higher-level control device. As described later, a speed value measured by the speed sensor 10 is used to diagnose the operation states of the dampers 8A and 8B. Thus, the vehicle speed sensor 10 is connected to the diagnostic device 13 via the control device (not shown) and the communication line 14. That is, the signal corresponding to the vehicle speed measured by the vehicle speed sensor 10 is output to the diagnostic device 13 via the control device (not shown) and the communication line 14. As a result, the vehicle speed sensor 10 forms a speed measurement unit configured to measure (detect) the speed value of the vehicle 1, and to output the signal corresponding to this speed value to the diagnostic device 13.

The position sensor 11 obtains a travel position (current position) of the vehicle 1. The position sensor 11 includes a receiver which receives signals from navigation satellites of a satellite positioning navigation and timing systems (SPNT) such as the GPS. The position sensor 11 is connected to the control device (not shown), for example, the higher-level control device. As described later, position information obtained by the position sensor 11 is used to diagnose the operation states of the dampers 8A and 8B. Thus, the position sensor 11 is connected to the diagnostic device 13 via the control device (not shown) and the communication line 14. That is, the signal corresponding to the position information obtained by the position sensor 11 is output to the diagnostic device 13 via the control device (not shown) and the communication line 14.

As a result, the position sensor 11 forms a position detection unit configured to obtain the position information on the bogies 3A and 3B as the travel position of the vehicle 1, and to output the signal corresponding to this position to the diagnostic device 13. The travel position (positions of the bogies 3A and 3B) of the vehicle 1 may be acquired from, in place of the position sensor 11, a railway signal system which is used as, for example, an automatic train stop device, an automatic train control device, or a signal safety device. That is, the position detection unit may be formed of the railway signal system. Similarly, the speed measurement unit may also be formed of the railway signal system when the vehicle speed can be detected by the railway signal system. In those cases, a control device for the railway signal system mounted to the vehicle 1 corresponds to the position detection unit and/or the speed measurement unit.

Incidentally, in order to increase ride comfort of the railway vehicle, a vibration damping device is arranged between a bogie and a vehicle body (for example, Patent Literature 1 to Patent Literature 4). It is intended that the vibration damping device suppresses vibration in the vertical direction or the left-right direction, and there exist, for example, a vibration damping device which uses a damping force adjustable shock absorber (semi-active damper) to switch a damping force in response to a vibration state and a vibration damping device which uses a control actuator (full-active damper) to actively generate a control force, to thereby suppress the vibration. Such vibration damping devices contribute to an increase in ride comfort of crews and passengers, and hence it is desired to be able to diagnose an abnormality thereof before an operation of the railway vehicle or during the operation thereof.

That is, as the speed and an added value of a railway vehicle increase, there have been developed technologies for reducing the vehicle body vibration. Of those technologies, there has been known a technology of diagnosing an abnormality (failure) of a damping force adjustable shock absorber (variable damping type shock absorber) employing a hydraulic pressure. When an abnormality of a railway vehicle is diagnosed, it is preferred to discriminate an abnormality of the track, an abnormality of the bogie, and an abnormality of the shock absorber from one another. For example, in Patent Literature 2, there is described a technology of detecting the abnormalities of the tracks and the bogie.

Specifically, an acceleration (vibration value) of the bogie is detected by an acceleration sensor provided on each of a plurality of bogies, and an acceleration (vibration value) of a wheelset is detected by an acceleration sensor provided on each of a plurality of wheelsets, to thereby detect the track abnormality and the bogie abnormality.

In Patent Literature 3, there is described a technology of vibrating a railway vehicle in a stop state, to thereby diagnose an abnormality of each of devices (a bogie frame, a wheelset, an actuator, and the like) of the vehicle. Further, in Patent Literature 4, there is described a technology of detecting an acceleration in the vertical direction and an acceleration in a pitching direction, and detecting an abnormality of a shock absorber from a phase difference between a vertical translation and a pitching. However, in order to highly accurately detect the abnormality of the shock absorber provided between the bogie and the vehicle body, additional sensors such as a sensor which detects, for example, vibration of a wheelset may be required in addition to existing sensors. As a result, in addition to requirement for additional cost, a system scale may increase.

In contrast, an operation state diagnostic device 12 according to the first embodiment can use the existing sensors to highly accurately determine (diagnose) an abnormality without requiring additional sensors. Description is now given of the operation state diagnostic device 12 according to the first embodiment.

The operation state diagnostic device 12 diagnoses the operation states of the dampers 8A and 8B being the conventional dampers. The operation state diagnostic device 12 includes, in addition to the above-mentioned pressure sensors 9A and 9B, vehicle speed sensor 10, and position sensor 11, the diagnostic device 13 serving as a calculation processing device which executes calculation processing for the diagnosis. The diagnostic device 13 is provided in the vehicle 1. To the diagnostic device 13, the pressures of the air springs 7A and 7B from the pressure sensors 9A and 9B, the travel speed (vehicle speed) of the vehicle 1 from the vehicle speed sensor 10, and the travel position (current position) of the vehicle 1 from the position sensor 11 are input in real time via the communication line 14. Thus, the diagnostic device 13 is connected to the higher-level control device (not shown) via the communication line 14. As a result, vehicle information on the vehicle 1 (that is, vehicle information including the pressures of the air springs 7A and 7B, and the travel speed and the travel position of the vehicle 1) is input to the diagnostic device 13 as higher-level signals via the communication line 14. The pressure sensors 9A and 9B, the vehicle speed sensor 10, and the position sensor 11 may be directly connected to the diagnostic device 13.

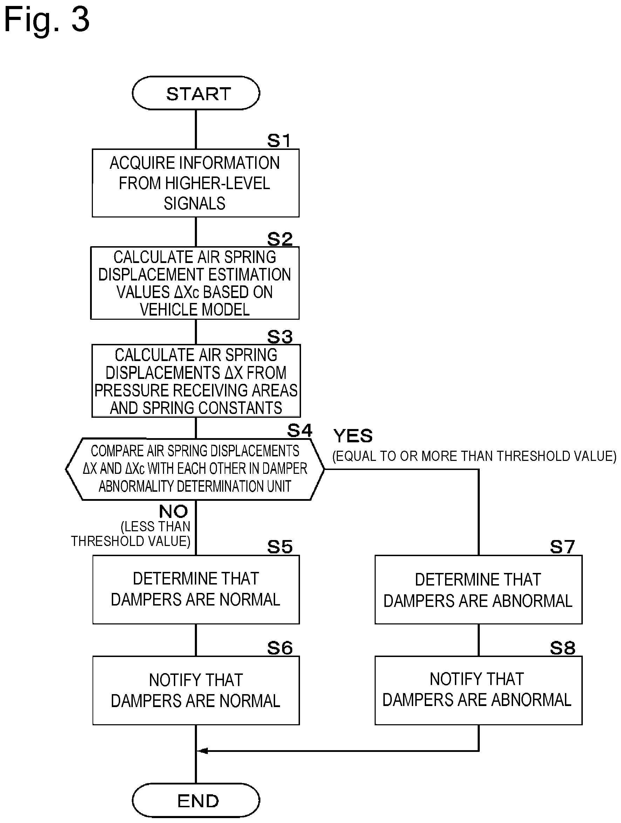

The diagnostic device 13 is installed at a position of the vehicle 1 determined in advance (for example, a position substantially at a center of the vehicle body 2). The diagnostic device 13 includes, for example, a microcomputer. The diagnostic device 13 includes, as a storage unit, a memory 13A formed of a ROM, a RAM, a nonvolatile memory, and the like. In the memory 13A, for example, a processing program for executing a processing flow of Fig. 3 described later, that is, a processing program to be used to diagnose the operation states of the dampers 8A and 8B, is stored (recorded). Moreover, in the memory 13A, in addition to reference values (for example, a reference pressure) and determination values (determination references and threshold values) to be used to diagnose the operation states, a vehicle model such as state equations to be used to calculate a state of the railway vehicle as described in Patent Literature 1 is also stored.

Moreover, in the memory 13A, the pressures of the air springs 7A and 7B and the travel speed and the travel position of the vehicle 1 are stored in real time. Further, in the memory 13A, information (data) for obtaining, from the travel position, a vertical displacement (height position) of the track (railway) at the travel position, that is, relationships between the travel position and the vertical displacements on the left and right tracks corresponding to this travel position, are stored as maps (track maps each for each of the left and right wheels). This information (track information) can be rewritten to the latest information when, for example, inspection work, maintenance work, or change work for the tracks has been executed.

The diagnostic device 13 acquires, in real time, the signals of the pressure values from the pressure sensors 9A and 9B, the signal of the vehicle speed from the vehicle speed sensor 10, and the signal of the travel position from the position sensor 11 during the travel of the vehicle 1. As the vehicle speed and/or the travel position, a signal of the vehicle speed and/or a signal of the travel position from the railway signal system may be used. The diagnostic device 13 determines the abnormality of each of the dampers 8A and 8B based on those signals. Specifically, the diagnostic device 13 executes processing of internally executing calculation based on the pressure values of the air springs 7A and 7B and the vehicle speed and the travel position of the vehicle 1, to thereby diagnose the operation states of the dampers 8A and 8B.

In this case, the diagnostic device 13 calculates vertical displacements of the air springs 7A and 7B from the pressure values of the air springs 7A and 7B. In addition, the diagnostic device 13 uses the "railway vehicle model" to estimate the vertical displacement of each of the air springs 7A and 7B from the "vertical displacement of each of the tracks obtained from the position information" and a "mass change in air spring reaction force calculated from the pressure value of each of the air springs 7A and 7B." After that, the diagnostic device 13 compares the calculation value and the estimation value of the vertical displacement of each of the air springs 7A and 7B with each other, to thereby determine the abnormality of each of the dampers 8A and 8B. That is, in the first embodiment, the vehicle model of the vehicle 1 is used to calculate the displacement of each of the air springs 7A and 7B as the estimation value (displacement estimation value) based on the travel speed and the current position of the vehicle 1 and the pressure sensor value of each of the air springs 7A and 7B delivered to the various devices included in the vehicle 1. Simultaneously, the displacement of each of the air springs 7A and 7B is calculated as the calculation value (displacement calculation value) from the pressure sensor value, a pressure receiving area, and a spring constant of each of the air springs 7A and 7B. Then, the estimation value and the calculation value are compared with each other, to thereby determine the abnormality of each of the dampers 8A and 8B.

Thus, as illustrated in Fig. 2, the diagnostic device 13 includes a reference pressure output unit 15, a subtraction unit 16, a spring displacement calculation unit 17 which forms a spring mechanism displacement calculation unit, a spring reaction force calculation unit 18, a mass change calculation unit 19, a track vertical displacement calculation unit 20 for a front axle position, a delay time calculation unit 21, a track vertical displacement calculation unit 22 for a rear axle position, a spring displacement estimation unit 23 serving as a spring mechanism displacement estimation unit, and a damper abnormality determination unit 24 serving as a shock absorber abnormality determination unit.

The reference pressure output unit 15 outputs, to the subtraction unit 16, a reference pressure $P0$ [Pa] for each of the air springs 7A and 7B stored in advance in the memory 13A. To the subtraction unit 16, the pressure of each of the air springs 7A and 7B (for example, the pressure of each of the four air springs 7A and 7B) is input from each of the pressure sensors 9A and 9B, and the reference pressure (for example, the reference pressure for each of the four air springs 7A and 7B) is input from the reference pressure output unit 15. The subtraction unit 16 subtracts the reference pressure $P0$ from the pressure $P$ [Pa] (that is, the pressure $P$ in real time) of each of the air springs 7A and 7B measured (detected) by each of the pressure sensors 9A and 9B, to thereby obtain a difference pressure $\Delta P$ with respect to the reference pressure $P0$ being the reference value. That is, the subtraction unit 16 executes calculation given by Expression 1.

[Expression 1]

$$P - P_0 = \Delta P$$

The subtraction unit 16 outputs the calculated difference pressure $\Delta P$ (for example, the difference pressure $\Delta P$ of each of the four air springs 7A and 7B) to the spring displacement calculation unit 17 and the spring reaction force calculation unit 18. To the spring displacement calculation unit 17, the difference pressure $\Delta P$ is input from the subtraction unit 16. The spring displacement calculation unit 17 uses the pressure value (more specifically, the difference pressure $\Delta P$) of each of the air springs 7A and 7B output from each of the pressure sensors 9A and 9B to calculate the vertical displacement of each of the air springs 7A and 7B, and outputs the calculation value to the damper abnormality determination unit 24. In this case, the spring displacement calculation unit 17 divides a product of the difference pressure $\Delta P$ of each of the air springs 7A and 7B and a pressure receiving area A [m$^2$] by an air spring constant K [N/m], to thereby obtain an air spring displacement $\Delta X$ [m]. That is, the spring displacement calculation unit 17 executes calculation given by Expression 2.

[Expression 2]

$$\Delta P \times A / K = \Delta X$$

The spring displacement calculation unit 17 outputs, to the damper abnormality determination unit 24, the calculated air spring displacement $\Delta X$ (for example, the air spring displacement $\Delta X$ of each of the four air springs 7A and 7B) as the calculation value of the vertical displacement of each of the air springs 7A and 7B. To the spring reaction force calculation unit 18, the difference pressure $\Delta P$ is input from the subtraction unit 16. The spring reaction force calculation unit 18 uses the pressure value (more specifically, the difference pressure $\Delta P$) of each of the air springs 7A and 7B output from each of the pressure sensors 9A and 9B to calculate the reaction force of each of the air springs 7A and 7B in the vertical direction, and outputs the calculation value to the mass change calculation unit 19. In this case, the spring reaction force calculation unit 18 multiplies the difference pressure $\Delta P$ and the pressure receiving area A by each other, to thereby obtain an air spring reaction force $\Delta F$ [N]. That is, the spring reaction force calculation unit 18 executes calculation given by Expression 3.

[Expression 3]

$$\Delta P \times A = \Delta F$$

The spring reaction force calculation unit 18 outputs, to the mass change calculation unit 19, the calculated air spring reaction force $\Delta F$ (for example, the air spring reaction force $\Delta F$ of each of the four air springs 7A and 7B) as first information relating to the pressure value P of each of the air springs 7A and 7B. To the mass change calculation unit 19, the air spring reaction force $\Delta F$ is input from the spring reaction force calculation unit 18. The mass change calculation unit 19 uses the first information (air spring reaction force $\Delta F$) relating to the pressure value P of each of the air springs 7A and 7B output from the spring reaction force calculation unit 18 to calculate a mass change $\Delta M$, and outputs the calculation value to the spring displacement estimation unit 23. In this case, the mass change calculation unit 19 divides the air spring reaction force $\Delta F$ by the gravity acceleration "g", to thereby obtain the mass change $\Delta M$ of the vehicle body 2 from a reference value. That is, the mass change calculation unit 19 executes calculation given by Expression 4.

[Expression 4]

$$\Delta F / g = \Delta M$$

The mass change calculation unit 19 outputs, to the spring displacement estimation unit 23, the calculated mass change $\Delta M$ (for example, the mass change $\Delta M$ of each of the four air springs 7A and 7B) as second information relating to the pressure value P of each of the air springs 7A and 7B. To the track vertical displacement calculation unit 20, a current position L of the vehicle 1 output from the position sensor 11 is input. The track vertical displacement calculation unit 20 obtains, from the current position L of the vehicle 1, the vertical displacements of the tracks at this position. Specifically, the track vertical displacement calculation unit 20 obtains vertical displacements Sf of the tracks (left front track vertical displacement Sfl and right front track vertical displacement Sfr) at a front axle position (for example, a position of the bogie 3A on the front side in the travel direction) from the current position L of the vehicle 1 based on the track maps (track information) for the left and right wheels (wheels 4) stored in the memory 13A of the diagnostic device 13. The track vertical displacement calculation unit 20 outputs the obtained vertical displacements Sf (Sfl and Sfr) of the tracks at the front axle position to the track vertical displacement calculation unit 22 which calculates vertical displacements Sr (left rear track vertical displacement Srl and the right rear track vertical displacement Srr) of the tracks at a rear axle position (for example, the position of the bogie 3B on the rear side in the travel direction). Moreover, the track vertical displacement calculation unit 20 outputs the obtained vertical displacements Sf (Sfl and Sfr) of the tracks at the front axle position to the spring displacement estimation unit 23.

In this case, in a case in which the track vertical displacement calculation unit 20 reads the track maps (track information), when a railroad line on which the vehicle 1 travels is a single line, the track vertical displacement calculation unit 20 can read the data (information) as it is. However, when the railroad line is a double line, it is preferred that the track vertical displacement calculation unit 20 differentiate the current position L to calculate the travel direction of the electric railcar, and discriminate track information on an inbound line and track information on outbound line from each other based on the travel direction. That is, it is preferred that, in the memory 13A, the track information on the inbound line and the track information on the outbound line be stored, and the track information corresponding to the travel direction at the time be used. A reason for this is that the tracks for the vehicle 1 are not completely the same between the inbound line and the outbound line. For example, a position and structure of a branch may be different between the inbound line and the outbound line. Further, a train travels on, for example, a passing siding or a main line of the same inbound line depending on the type of the train, and hence the train may be discriminated between a local train and a superior train (rapid, express, semi-express, and limited express) based on the position information and the speed, and track information corresponding to this discrimination may be stored in the memory 13A.

To the delay time calculation unit 21, the travel speed V [m/s] (that is, the travel speed V in real time) of the vehicle 1 measured by the vehicle speed sensor 10 is input. The delay time calculation unit 21 obtains a delay time τ between the front axle position and the rear axle position from the travel speed V and a distance between axles D [m] of the vehicle 1 (for example, a distance between the bogie 3A on the front side and the bogie 3B on the rear side). That is, the delay time calculation unit 21 divides the distance between axles D [m] of the vehicle 1 by the travel speed V, to thereby obtain the delay time τ. The delay time calculation unit 21 outputs the obtained delay time τ to the track vertical displacement calculation unit 22 for the rear axle position.

To the track vertical displacement calculation unit 22 for the rear axle position, the vertical displacements Sf (Sfl and Sfr) of the tracks at the front axle position are input from the track vertical displacement calculation unit 20 for the front axle position, and the delay time τ is input from the delay time calculation unit 21. The track vertical displacement calculation unit 22 for the rear axle position calculates vertical displacements Sr (Srl and Srr) of the tracks at the rear axle position from the vertical displacements Sf (Sfl and Sfr) of the tracks at the front axle position and the delay time τ. The track vertical displacement calculation unit 22 outputs the calculated vertical displacements Sr (Srl and Srr) of the tracks at the rear axle position to the spring displacement estimation unit 23.

The spring displacement estimation unit 23 is arranged on the vehicle 1 together with the spring displacement calculation unit 17, the damper abnormality determination unit 24, and the like. To the spring displacement estimation unit 23, the "mass changes ΔM of the vehicle body 2" are input from the mass change calculation unit 19, the "vertical displacements Sf (Sfl and Sfr) of the tracks at the front axle position" are input from the track vertical displacement calculation unit 20, and the "vertical displacements Sr (Srl and Srr) of the tracks at the rear axle position" are input from the track vertical displacement calculation unit 22. The spring displacement estimation unit 23 receives the mass changes ΔM of the vehicle body 2, the vertical displacements Sf (Sfl and Sfr) of the tracks at the front axle position, and the vertical displacements Sr (Srl and Srr) of the tracks at the rear axle position as inputs, and uses the vehicle model to estimate the vertical displacements of the air springs 7A and 7B through the calculation. The spring displacement estimation unit 23 outputs those estimation values to the damper abnormality determination unit 24 as the air spring displacement estimation values ΔXc (for example, the air spring displacement estimation values ΔXc of the four air springs 7A and 7B).

That is, the spring displacement estimation unit 23 uses the "railway vehicle model obtained by modeling the vehicle 1," the "position information output from the position sensor 11 (more specifically, the vertical displacements Sf and Sr of the tracks obtained from the position information)," and the "pressure values P (more specifically, the mass changes ΔM calculated from the pressure values P) of the air springs 7A and 7B" to estimate the vertical displacements of the air springs 7A and 7B, and outputs the vertical displacements to the damper abnormality determination unit 24. In more detail, the spring displacement estimation unit 23 estimates the vertical displacements of the air springs 7A and 7B through the calculation from the "railway vehicle model," the "vertical displacements Sf and Sr of the tracks obtained from the speed value of the vehicle 1 output from the vehicle speed sensor 10 and the position information," and the "second information (mass changes ΔM) relating to the pressure values P." The spring displacement estimation unit 23 outputs, to the damper abnormality determination unit 24, the estimated vertical displacements of the air springs 7A and 7B, that is, the air spring displacement estimation values ΔXc being the estimation values of the vertical displacements of the air springs 7A and 7B.

In this case, for example, the "vehicle model" as described in Patent Literature 1 may be used as the railway vehicle model. That is, the spring displacement estimation unit 23 can use the railway model (state equations) as described in paragraph [0036] and the subsequent paragraphs and Fig. 3 of the drawings of Patent Literature 1 to estimate the vertical displacements of the air springs 7A and 7B (to calculate the air spring displacement estimation values ΔXc). The spring displacement estimation unit 23 may use a railway vehicle model (state equations) other than the model as described in Patent Literature 1. For example, a vehicle model (state equations) capable of more accurately obtaining the estimation values of the vertical displacements of the air springs 7A and 7B, that is, a vehicle model (state equations) more accurately corresponding to the structure of the vehicle 1, may be used.

To the damper abnormality determination unit 24, the air spring displacements $\Delta X$ are input from the spring displacement calculation unit 17, and the air spring displacement estimation values $\Delta Xc$ are input from the spring displacement estimation unit 23. The damper abnormality determination unit 24 compares each of the air spring displacements $\Delta X$ and each of the air spring displacement estimation values $\Delta Xc$ with each other, to thereby determine whether each of the dampers 8A and 8B is normal or abnormal. That is, the damper abnormality determination unit 24 compares each of the air spring displacements $\Delta X$ which are output from the spring displacement calculation unit 17, and are the calculation values of the vertical displacements of the air springs 7A and 7B, and each of the air spring displacement estimation values $\Delta Xc$ which are output from the spring displacement estimation unit 23, and are the estimation values of the vertical displacements of the air springs 7A and 7B with each other, to thereby determine the abnormality. The damper abnormality determination unit 24 can determine that each of the dampers 8A and 8B is abnormal, for example, when a difference value between the air spring displacement $\Delta X$ and the air spring displacement estimation value $\Delta Xc$ is equal to or larger than a threshold value X1 set in advance. The threshold value X1 is a threshold value which serves as a determination criterion for determining whether each of the dampers 8A and 8B is normal or abnormal, and is stored in advance in the memory 13A. The threshold value X1 can be obtained in advance thorough, for example, calculation, experiments, simulation, or the like, and is set as a value enabling accurate determination. The damper abnormality determination unit 24 outputs (notifies) a result of determination of whether or not each of the dampers 8A and 8B is normal, that is, a vertical damper abnormality detection result, to the higher-level control device as diagnostic information of the diagnostic device 13. As a result, the higher-level control device can acquire the vertical damper abnormality detection result (whether or not each of the dampers 8A and 8B is normal). When the higher-level control device acquires, for example, a determination result indicating the abnormality, the higher-level control device displays a warning on a monitor provided in an operation room of the vehicle 1 or the like, to thereby notify an operator of the abnormality.

The vehicle 1 and the operation state diagnostic device 12 mounted to the vehicle 1 in the first embodiment have the above-mentioned configuration. Next, description is given of an operation thereof.

The vehicle 1 travels toward, for example, the left side of Fig. 1 along the rails R (tracks). When vibration such as roll (lateral oscillation) and pitch (oscillation in the front-rear direction) occurs during the travel of the vehicle 1, the dampers 8A and 8B generate damping forces for reducing the vibration in the vertical direction at this time. As a result, the vibration of the vehicle body 2 in the vertical direction can be reduced (suppressed). Moreover, the vehicle information on the vehicle 1, that is, the pressure values P of the air springs 7A and 7B and the current position L and the travel speed V of the vehicle 1, is input as the higher-level signals from the higher-level control device to the diagnostic device 13 via the communication line 14 during the travel of the vehicle 1. The diagnostic device 13 diagnoses the operation states of the dampers 8A and 8B based on the pressure values P, the current position L, and the travel speed V which are acquired in real time. That is, the diagnostic device 13 determines the abnormality of the dampers 8A and 8B during the travel of the vehicle 1.

The flowchart of Fig. 3 shows diagnostic processing (determination processing for the abnormality) executed in the diagnostic device 13. The processing of Fig. 3 is repeatedly executed at a predetermined control cycle (for example, every 10 msec) after the diagnostic device 13 is activated.

When the processing of Fig. 3 is started, the diagnostic device 13 acquires the information from the higher-level signals in S1. That is, in S1, the diagnostic device 13 acquires, from the higher-level control device (not shown) via the communication line 14, the vehicle information on the vehicle 1, specifically, the position information (current position L) on the vehicle 1, the speed value (travel speed V) of the vehicle 1, and the pressure values P being the internal pressures of the air springs 7A and 7B. In S2, the diagnostic device 13 obtains the "vertical displacements Sf (Sfl and Sfr) of the tracks at the front axle position," the "vertical displacements Sr (Srl and Srr) of the tracks at the rear axle position," and the "mass changes $\Delta M$" from the vehicle information (the current position L, the travel speed V, and the pressure values P) acquired in S1, and calculates the air spring displacement estimation values $\Delta Xc$ based on the railway vehicle model. In S3, the diagnostic device 13 calculates the air spring displacements $\Delta X$ from the vehicle information (pressure values P) acquired in S1.

In S4, the diagnostic device 13 determines whether or not each of the dampers 8A and 8B is normal. In this case, in S4, the diagnostic device 13 compares each of the air spring displacement estimation values $\Delta Xc$ calculated in S2 and each of the air spring displacements $\Delta X$ calculated in S3 with each other. That is, in S4, the diagnostic device 13 determines whether or not, for example, the difference value between each of the air spring displacement estimation values $\Delta Xc$ and each of the air spring displacements $\Delta X$ is equal to or larger than the threshold value X1. When a determination of "NO" is made in S4, that is, the difference value between each of the air spring displacement estimation values $\Delta Xc$ and each of the air spring displacements $\Delta X$ is determined to be smaller than the threshold value X1 in S4, the process proceeds to S5. Meanwhile, when a determination of "YES" is made in S4, that is, the difference value between each of the air spring displacement estimation values $\Delta Xc$ and each of the air spring displacements $\Delta X$ is determined to be equal to or larger than the threshold value X1 in S4, the process proceeds to S7.

In S5, the diagnostic device 13 determines that each of the damper 8A and 8B is normal, and the process proceeds to S6. In S6, a signal indicating that "the dampers are normal" is output (notified) as the diagnostic information from the damper abnormality determination unit 24 to the higher-level control device, and the process ends (returns). That is, the process returns from "END" to "START", and the processing steps subsequent to S1 are repeated. In contrast, in S7, the diagnostic device 13 determines that any of the dampers 8A and 8B is (are) abnormal, and the process proceeds to S8. In S8, a signal indicating that "the damper(s) is (are) abnormal" is output (notified) as the diagnostic information from the damper abnormality determination unit 24 to the higher-level control device, and the process ends (returns). The notification indicating that "the dampers are normal" in S6 may be combined with a notification made during the operation, or may be omitted. That is, the damper abnormality determination unit 24 may be configured to output, as the diagnostic information, the signal indicating that "damper(s) is (are) abnormal" to the higher-level control device only when the damper abnormality determination unit 24 determines that any of the dampers 8A and 8B is (are) abnormal.

In the processing step of S4, that is, when the damper abnormality determination unit 24 compares the air spring displacement $\Delta X$ and the air spring displacement estimation value $\Delta Xc$ with each other, the comparison may always be made in real time, or average values within a period set in advance (specified period) may be compared with each other. Further, the damper abnormality determination unit 24 may determine that each of the dampers 8A and 8B is abnormal when an integrated value of the difference between the air spring displacement $\Delta X$ and the air spring displacement estimation value $\Delta Xc$ is equal to or larger than a specified value. That is, the numerical value processing relating to the abnormality determination (diagnosis for the operation state) is not limited to the above-mentioned processing.

Moreover, for example, consideration is given of a case in which the difference value between the air spring displacement estimation value $\Delta Xc$ and the air spring displacement $\Delta X$ of each of all of the air springs 7A and 7B is determined to be equal to or larger than the threshold value X1 in S4. In this case, it may be considered that all of the dampers 8A and 8B (four dampers 8A and 8B) are simultaneously brought into the abnormal state, but a possibility of this abnormal state is low. Thus, in this case, the tracks may be determined to be abnormal. For example, a processing step of making this determination may be added after the processing step of S4 of Fig. 3. Further, when the difference value between the air spring displacement $\Delta X$ and the air spring dis-

placement estimation value $\Delta Xc$ is determined to be equal to or larger than the threshold value X1, the damper abnormality determination unit 24 may, for example, increase a section of the travel railroad line for the abnormality determination, may determine that the track is abnormal when the abnormality occurs (the difference value is equal to or larger than the threshold value X1) in only a specific section (short section) of the travel railroad line, and may determine that each of the dampers 8A and 8B is abnormal when the abnormality occurs (the difference value is equal to or larger than the threshold value X1) in the entire travel railroad line. That is, the track abnormality and the damper abnormality may be discriminated from each other. In any case, in the first embodiment, the abnormality determination (operation state diagnosis) of the dampers 8A and 8B can be made highly accurately in real time based on the information always flowing through the vehicle 1 as the higher-level signals during the travel of the vehicle 1.

As described above, in the first embodiment, the "air spring displacement $\Delta X$ being the calculation value of the vertical displacement of each of the air springs 7A and 7B" and the "air spring displacement estimation value $\Delta Xc$ being the estimation value of the vertical displacement of each of the air springs 7A and 7B" are compared with each other, to thereby determine the abnormality. In this case, the spring displacement calculation unit 17 can use the pressure value P measured by each of the existing pressure sensors 9A and 9B to calculate the air spring displacement $\Delta X$. Moreover, the spring displacement estimation unit 23 can use the pressure value P measured by each of the existing pressure sensors 9A and 9B and the position information acquired by the existing position sensor 11 to estimate the air spring displacement estimation value $\Delta Xc$. Further, the spring displacement estimation unit 23 can use the railway vehicle model to estimate the air spring displacement estimation value $\Delta Xc$ from the information on the tracks (the vertical displacements Sf and Sr of the tracks) at the position obtained from the position information, and hence the accuracy of the estimation can be increased. As a result, the accuracy of the determination of the abnormality can be increased while suppressing requirement for additional sensors.

In the first embodiment, the spring displacement estimation unit 23 estimates the air spring displacement estimation value $\Delta Xc$ from the "railway vehicle model," "each of the vertical displacements Sf and Sr of the tracks obtained from the speed value output from the vehicle speed sensor 10 and the position information acquired from the existing position sensor 11," and "each of the mass changes $\Delta M$ of the vehicle body 2 being the information relating to the pressure value P." Thus, the spring displacement estimation unit 23 can use each of the vertical displacements Sf (Sfl and Sfr) of the tracks at the position corresponding to the axle on the front side (the bogie 3A on the front side) in the travel direction and each of the vertical displacements Sr (Srl and Srr) of the tracks at the position corresponding to the axle on the rear side (the bogie 3B on the rear side) in the travel direction to estimate each of the air spring displacement estimation values ΔXc. As a result, the estimation accuracy of the spring displacement estimation unit 23 can be further increased.

In the first embodiment, description has been given of, as an example, the case of the configuration in which the speed value (travel speed V) output from the vehicle speed sensor 10 is used to calculate the vertical displacements Sr (Srl and Srr) of the tracks at the position corresponding to the axle on the rear side (bogie 3B on the rear side) in the travel direction. However, the configuration is not limited to this example. For example, the vehicle speed sensor 10 may be omitted, and the speed value (travel speed V) calculated from the position information (current position L) of the position sensor 11 may be used to calculate the vertical displacements Sr (Srl and Srr) of the tracks at the position corresponding to the axle on the rear side (bogie 3B on the rear side) in the travel direction.

That is, the spring mechanism displacement estimation unit may estimate the vertical displacement of the spring mechanism from the "railway vehicle model," the "vertical displacement of the track obtained from the speed value of the railway vehicle calculated from the position information and the position information," and the "information relating to the pressure value." Also in this case, the spring mechanism displacement estimation unit can use the vertical displacements of the tracks at the position corresponding to the axle on the front side in the travel direction and the vertical displacements of the tracks at the position corresponding to the axle on the rear side in the travel direction to estimate the vertical displacements of the spring mechanisms. Thus, also in this case, the estimation accuracy of the spring mechanism displacement estimation unit can be further increased.

In the first embodiment, description has been given of, as an example, the case of the configuration of using the position information (current position L) and the speed value (travel speed V) to obtain the vertical displacements Sf (Sfl and Sfr) of the tracks at the position corresponding to the axle on the front side (the bogie 3A on the front side) in the travel direction and the vertical displacements Sr (Srl and Srr) of the tracks at the position corresponding to the axle on the rear side (the bogie 3B on the rear side) in the travel direction. However, the configuration is not limited to this example. For example, the vertical displacements of the tracks may be obtained without using the speed value. That is, the vertical displacements of the tracks at the position corresponding to the axle on the front side (the bogie on the front side) in the travel direction and the vertical displacements of the tracks at the position corresponding to the axle on the rear side (the bogie on the rear side) in the travel direction may be obtained from the current position (position information) of the railway vehicle, the track information (track maps) on the railroad line on which the railway vehicle is traveling, and dimensions of the railway vehicle.

In the first embodiment, description has been given of, as an example, the case in which the diagnostic device 13 which executes the calculation processing for determining the abnormality of the dampers 8A and 8B is provided independently of the higher-level control device, but the diagnostic device 13 may be built into the higher-level control device. That is, the abnormality determination for the shock absorbers may have a configuration including a dedicated arithmetic processing device (microcomputer) which makes this determination or a configuration in which this determination is made by an arithmetic processing device (microcomputer) which executes other control processing.

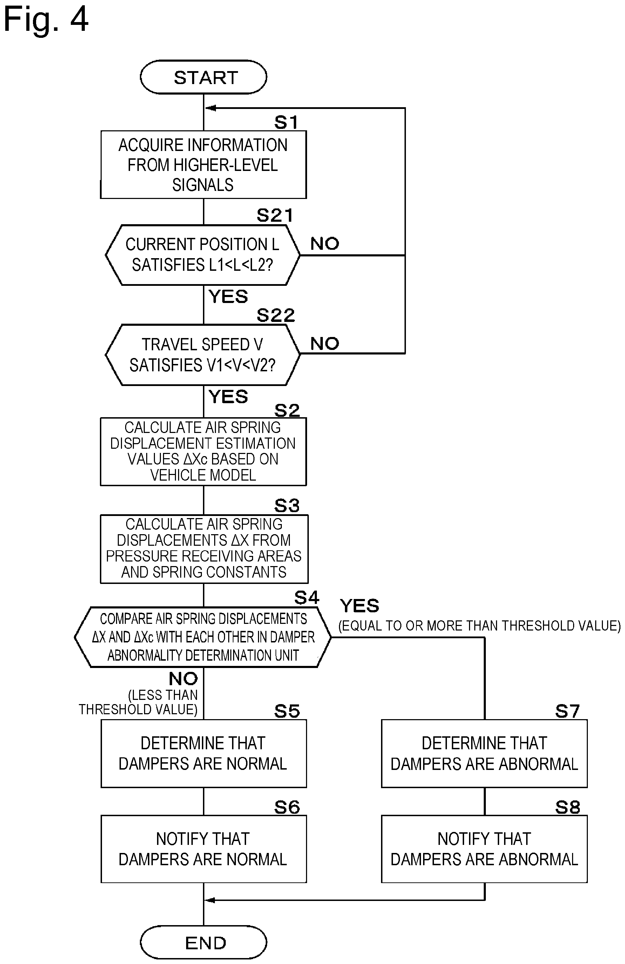

In the first embodiment, the abnormality determination can always be made in real time by the diagnostic device 13 during the travel of the vehicle 1. However, the error of the calculation function (estimation function) based on the railway vehicle model of the diagnostic device 13 may increase (the accuracy of the air spring displacement estimation values ΔXc may decrease) depending on the travel speed V of the vehicle 1 and the track condition (current position L). Thus, as in a first modification example illustrated in Fig. 4, the abnormality determination (operation state diagnosis) may be made when the vehicle 1 is traveling in a travel section (between L1 and L2) set in advance at a travel speed (between V1 and V2) set in advance.

That is, in the first modification example, the diagnostic device 13 uses the air spring displacement estimation value ΔXc at the time when the position information (current position L) is within the range (L1<L<L2) set in advance, and the speed value (travel speed V) is within the range (V1<V<V2) set in advance, to thereby diagnose the operation state of each of the dampers 8A and 8B. Thus, in the first modification example, processing steps of S21 and S22 are added between S1 and S2 of Fig. 3 in the first embodiment. That is, in the first modification example, as illustrated in Fig. 4, the processing steps of S21 and S22 are executed between S1 and S2. In this case, in S21 following S1, it is determined whether or not the current position L (position information) acquired in S1 is within the predetermined range, for example, between the predetermined value L1 and the predetermined value L2 (L1<L<L2). When a determination of "YES" is made in S21, the process proceeds to S22. When a determination of "NO" is made in S21, the process returns to S1. In S22, it is determined whether or not the travel speed V (speed value) acquired in S1 is within the predetermined range, for example, between the predetermined value V1 and the predetermined value V2 (V1<V<V2). When a determination of "YES" is made in S22, the process proceeds to the processing step of S2 and the subsequent steps (abnormality determination processing). When a determination of "NO" is made in S22, the process returns to S1.

As described above, in the first modification example, the section and the travel speed for the abnormality determination are set. Thus, for example, by appropriately setting the speed (predetermined values V1 and V2), the abnormality determination can be stopped under a state in which other vehicles are congested before and after the vehicle 1 and the travel speed V of the vehicle 1 is thus lower than a normal speed in morning or evening commuting hours, for example. Moreover, by appropriately setting the section (predetermined values L1 and L2), the air spring displacement estimation values $\Delta Xc$ in a section in which the tracks are extremely unstable (place inappropriate for the abnormality determination) such as sections before and after a turnout can be excluded, and the air spring displacement estimation values $\Delta Xc$ in a section in which the tracks are extremely stable (place appropriate for the abnormality determination) such as a straight and horizontal section can be employed. As a result, the accuracy of the abnormality determination can be increased. That is, according to the first modification example described above, the operation states of the dampers 8A and 8B can be diagnosed by using the air spring displacement estimation values $\Delta Xc$ at the time when the position information is within the range defined in advance. Thus, the operation states of the dampers 8A and 8B can be diagnosed by using the air spring displacement estimation values $\Delta Xc$ in the travel section in which the tracks are stable such as a straight section. As a result, the accuracy of the determination of the abnormality can be increased also in this respect. Any one of S21 and S22 may be omitted.

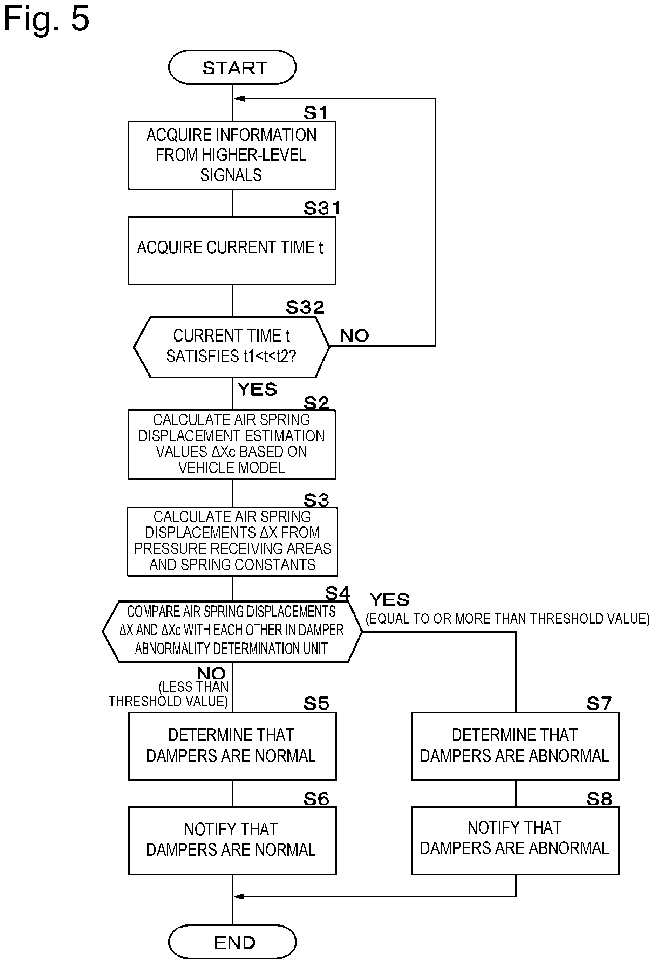

In the first embodiment, the abnormality determination can always be made in real time by the diagnostic device 13 during the travel of the vehicle 1. However, the error may increase depending on the travel condition of the vehicle 1 and the load condition of the vehicle body 2. Thus, the abnormality determination (operation state diagnosis) may be made during a period (between t1 and t2) set in advance as in a second modification example illustrated in Fig. 5. That is, in the second modification example, the diagnostic device 13 uses the air spring displacement estimation value $\Delta Xc$ at the time when the current time is within the range ($t1 < t < t2$) defined in advance, to thereby diagnose the operation state of each of the dampers 8A and 8B. Thus, in the second modification example, processing steps of S31 and S32 are added between S1 and S2 of Fig. 3 in the first embodiment. That is, in the second modification example, as illustrated in Fig. 5, the processing steps of S31 and S32 are executed between S1 and S2. In this case, in S31 following S1, a current time "t" is acquired. In S32 following S31, it is determined whether or not the current time "t" acquired in S31 is within the predetermined range, that is, for example, between a time t1 and a time t2 ($t1 < t < t2$). When a determination of "YES" is made in S32, the process proceeds to the processing step of S2 and the subsequent steps (abnormality determination processing). When a determination of "NO" is made in S32, the process returns to S1.

As described above, in the second modification example, the time for the abnormality determination is set. Thus, by appropriately setting the times t1 and t2, the abnormality determination can be made under a condition that the travel condition of the vehicle 1 is relatively constant, for example, early in the morning, late at night, or in the daytime. As a result, the accuracy of the abnormality determination can be increased. That is, according to the second modification example described above, the operation states of the dampers 8A and 8B can be diagnosed by using the air spring displacement estimation values $\Delta Xc$ at the time when the current time is within the range defined in advance. Thus, the operation states of the dampers 8A and 8B can be diagnosed by using the air spring displacement estimation values $\Delta Xc$ at the time when the travel condition of the vehicle 1 is relatively constant, for example, early in the morning, late at night, or in the daytime. As a result, the accuracy of the determination of the abnormality can be increased also in this respect.

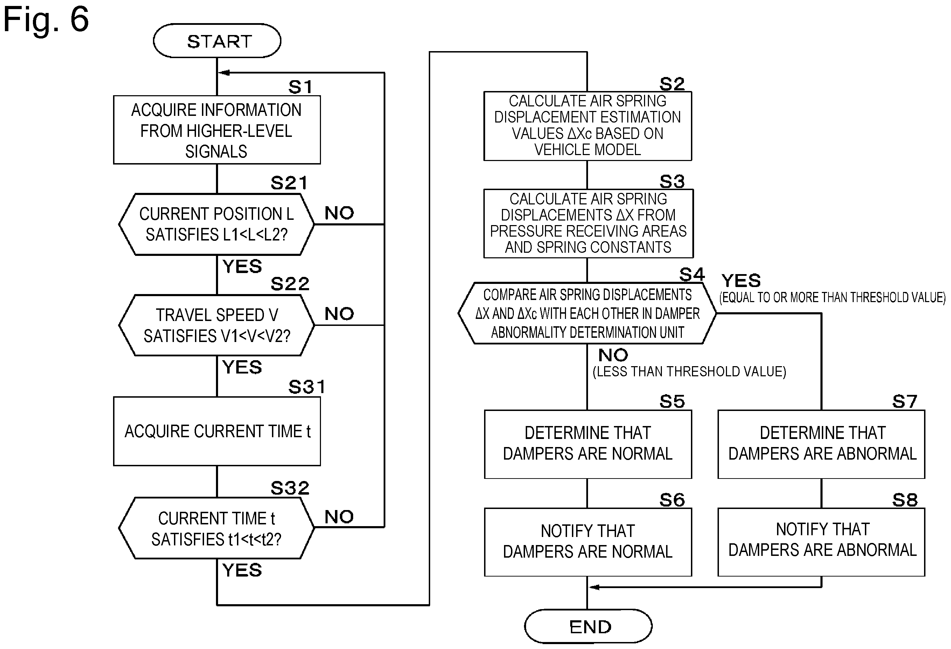

Moreover, Fig. 6 shows a third modification example. The third modification example is a combination of the first modification example and the second modification example. That is, in the third modification example, the abnormality determination (operation state diagnosis) may be made when the vehicle 1 is traveling in the travel section (between L1 and L2) set in advance at the travel speed (between V1 and V2) set in advance, and the current time is within the time (between t1 and t2) set in advance. As a result, the accuracy of the abnormality determination can be further increased.

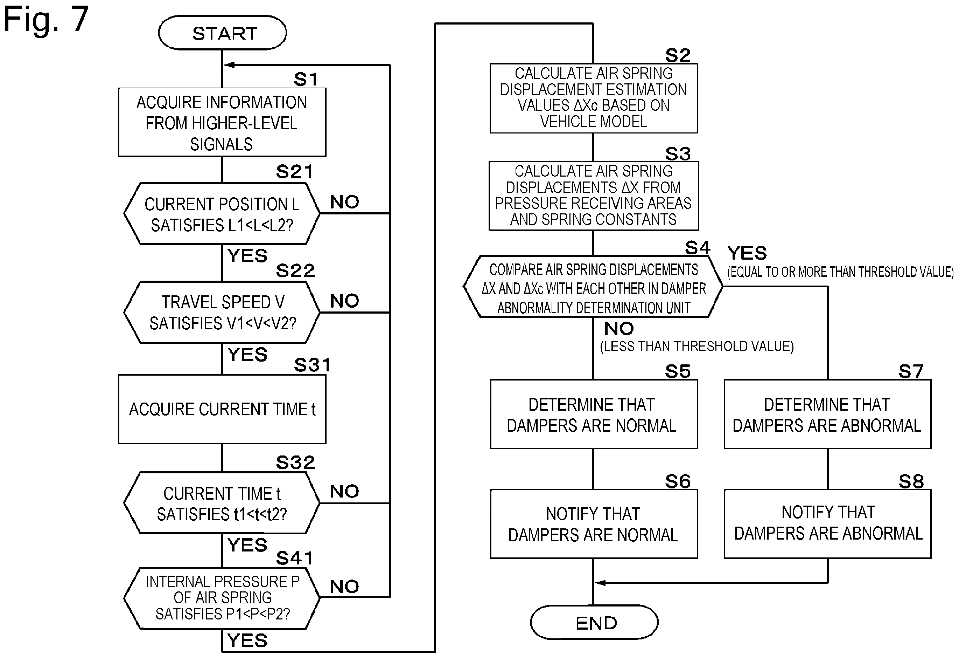

In the first embodiment and the first modification example to the third modification example, description is given of, as an example, the case in which the abnormality determination is made independently of the values of the pressures (internal pressures) of the air springs 7A and 7B. The vehicle 1 usually adjusts the internal pressures of the air springs 7A and 7B in response to the number of crews and passengers, to thereby maintain a vehicle height to be constant. However, for example, when the air of the air springs 7A and 7B leaks or when the internal pressures of the air springs 7A and 7B are increased to tilt the vehicle body, calculation accuracy for the estimation may decrease, resulting in an erroneous determination. Thus, as in a fourth modification example illustrated in Fig. 7, the abnormality determination (operation state diagnosis) may be made when the pressures of the air springs 7A and 7B are within a range (between P1 and P2) set in advance.

That is, in the fourth modification example, the diagnostic device 13 uses the air spring displacement estimation value $\Delta Xc$ at the time when the pressure P of each of the air springs 7A and 7B is within the range ($P1 < P < P2$) set in advance, to thereby diagnose the operation state of each of the dampers 8A and 8B. Thus, in the fourth modification example, a processing step of S41 is added after the processing step of S32 in the third modification example illustrated in Fig. 6. That is, in the fourth modification example, as illustrated in Fig. 7, the processing step of S41 is executed between S32 and S2. In this case, in S41 following S32, it is determined whether or not the pressure value P of each of the air springs 7A and 7B acquired in S1 is between the pressure values P1 and P2 (P1<P<P2). When a determination of "YES" is made in S41, the process proceeds to the processing step of S2 and the subsequent steps (abnormality determination processing). When a determination of "NO" is made in S41, the process returns to S1. As described above, in the fourth modification example, the pressure for the abnormality determination is set. Thus, by appropriately setting the pressure values P1 and P2, it is possible to suppress an erroneous determination based on an estimation value at the time when the internal pressure of each of the air springs 7A and 7B is abnormal (for example, when the change in internal pressure is large). As a result, the accuracy of the abnormality determination can be increased.

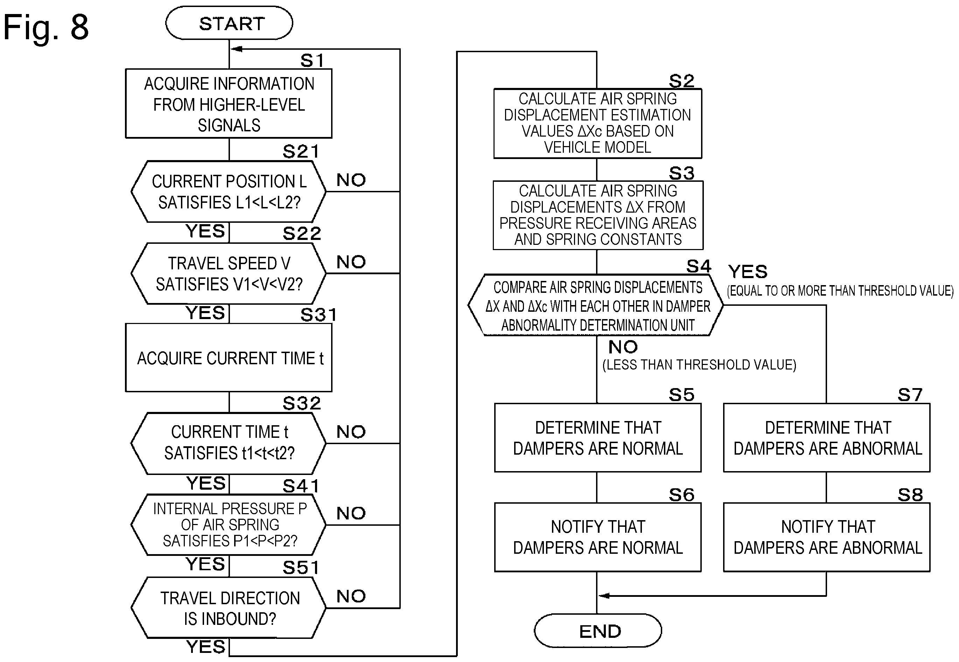

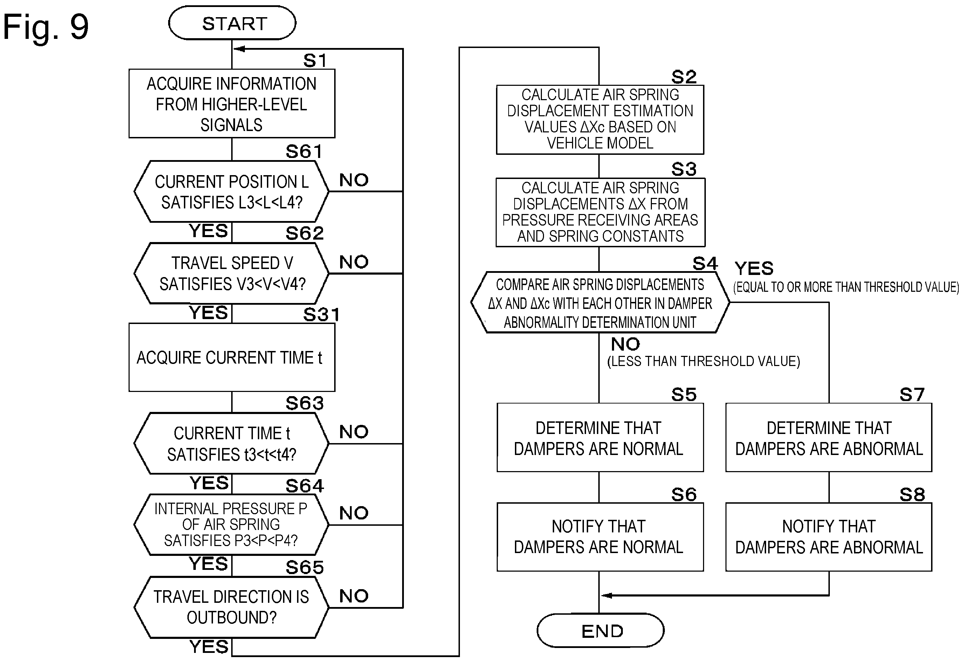

In the first embodiment and the first modification example to the fourth modification example, description has been given of, as an example, the case in which the abnormality determination is made independently of the travel direction of the vehicle 1. However, for the vehicle 1, a track state and absence/presence of a point are different between "an inbound line and an outbound line" or between "an inner line and an outer line," and hence the calculation accuracy of the estimation decreases when the same threshold value is used, and an erroneous determination may consequently be made. Thus, as in a fifth modification example illustrated in Fig. 8, the abnormality determination (operation state diagnosis) may be made when the vehicle 1 is traveling on the inbound line. Moreover, as in a sixth modification example illustrated in Fig. 9, the abnormality determination (operation state diagnosis) may be made when the vehicle 1 is traveling on the outbound line. The travel direction of the vehicle 1 can be determined from, for example, the position information. As a result, the operation states of the dampers 8A and 8B can be diagnosed through use of the vertical displacements of the tracks corresponding to the travel direction of the vehicle 1 determined from the position information.

In the fifth modification example illustrated in Fig. 8, a processing step of S51 is added in the course of the processing of the fourth modification example illustrated in Fig. 7. In S51, it is determined whether or not the travel direction is inbound. In the sixth modification example illustrated in Fig. 9, the processing steps of S21, S22, S32, S41, and S51 in the fifth modification example illustrated in Fig. 8 are changed to processing steps of S61, S62, S63, S64, and S65. That is, in the sixth modification example, threshold values (L3, L4, V3, V4, t3, and t4) for the current position, the travel speed, and the like are changed between the inbound line and the outbound line. However, all of the threshold values are not required to be changed, and, for example, the threshold values for the time, the speed, and the like may be the same. Moreover, in addition to the inbound line and the outbound line, the travel direction corresponding to the travel of the railway vehicle such as the inner line and the outer line may be selected. In this modification example, it is possible to select a travel section and a travel condition providing high calculation accuracy also in consideration of differences in travel condition including the difference between "the inbound line and the outbound line" or the difference between "the inner line and the outer line." As a result, the accuracy of the abnormality determination can be increased.

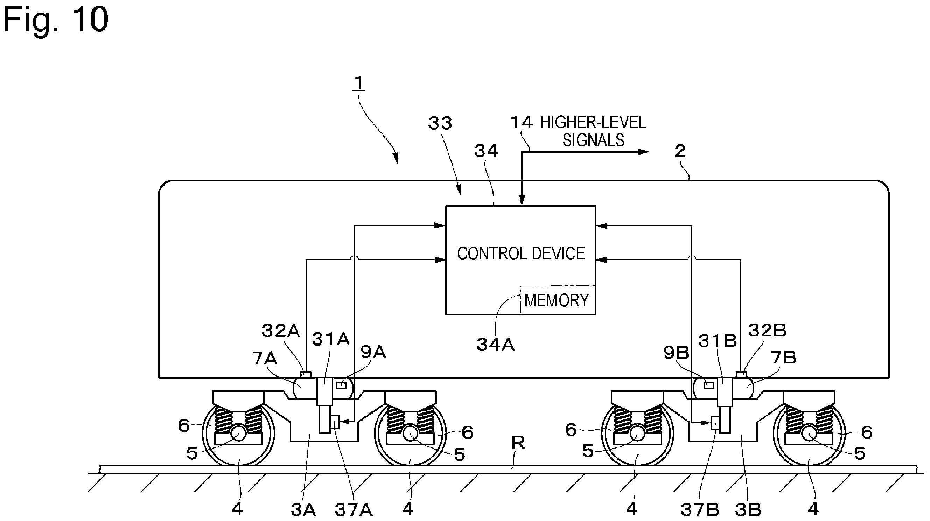

Next, Fig. 10 to Fig. 13 show a second embodiment of the present invention. A feature of the second embodiment is a configuration in which the shock absorbers between the bogie and the wheels are damping force adjustable dampers (semi-active dampers), and the diagnosis (abnormality determination processing) for the operation state is executed by a control device which controls damping forces of the damping force adjustable dampers. In the second embodiment, the same components as those in the first embodiment are denoted by the same reference symbols, and description thereof is omitted.

Dampers 31A to 31D serving as the shock absorbers are arranged between the vehicle body 2 and the bogies 3A and 3B of the vehicle 1. Each of the dampers 31A to 31D is the damping force adjustable damper (semi-active damper) capable of adjusting the damping force, and suppresses the vibration of the bogies 3A and 3B. In this case, the dampers 31A to 31D include control valves 37A to 37D such as solenoid valves, respectively. A damping characteristic of each of the dampers 31A to 31D can continuously be adjusted from a hard characteristic to a soft characteristic by adjusting a valve opening pressure of each of the control valves 37A to 37D through supply of electric power (drive current) from a control device 34.

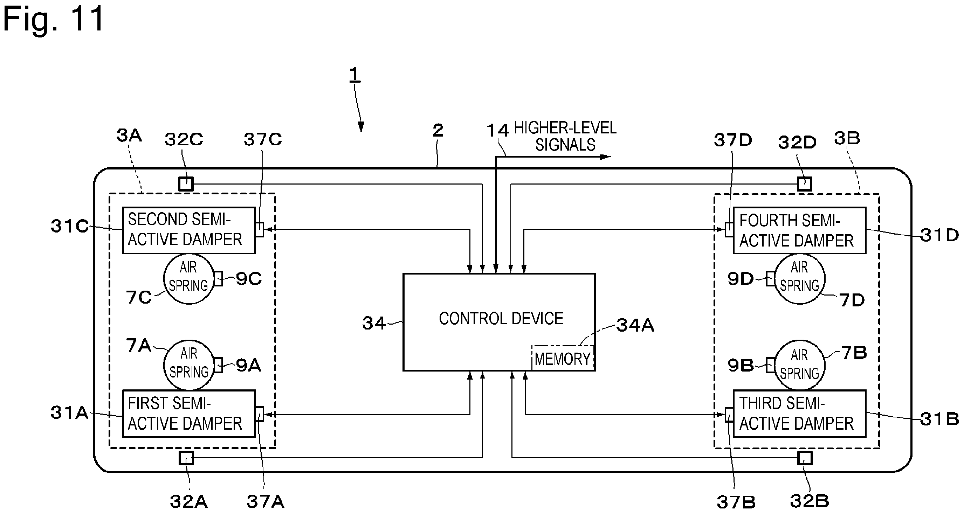

Each of the dampers 31A to 31D is not limited to the damper which continuously adjusts the damping characteristic, and may be a damper which can adjust the damping characteristic at two stages or a plurality of stages. Moreover, each of the dampers 31A to 31D may be a damping force adjustable shock absorber (for example, a shock absorber enclosing functional fluid such as electrorheological fluid or magnetorheological fluid) which adjusts the damping force in response to a voltage or a current. That is, as each of the dampers 31A to 31D, various types of damping force adjustable shock absorbers which can adjust (increase and decrease) the damping force at the same piston speed can be used. As illustrated in Fig. 11, two of the dampers 31A to 31D are arranged on one of the bogies 3A and 3B, and four dampers 31A to 31D are arranged on one vehicle 1 (two bogies 3A and 3B). That is, the dampers 31A to 31D serving as vertical dampers are arranged in parallel with air springs 7A to 7D, respectively, as in the dampers 8A and 8B in the first embodiment.

Moreover, as illustrated in Fig. 11, a total of four acceleration sensors 32A to 32D each of which measures, at a position thereof, an acceleration (vibration) in the vertical direction of the vehicle body 2 are provided at four corners of the vehicle body 2, that is, four positions apart from each other in the front-rear direction and the left-right direction of the vehicle body 2. The acceleration sensors 32A to 32D are sensors (behavior sensors) which are mounted to the plurality of different locations of the vehicle 1, and detect a behavior (more specifically, a vibration state of the vehicle body 2) of the vehicle 1. As the acceleration sensors 32A to 32D, various types of acceleration sensors, such as a sensor of the piezoelectric type, the servo type, or the piezoresistive type or another analog acceleration sensor, can be used.

The accelerations (vertical accelerations) measured by the acceleration sensors 32A to 32D are used to control the dampers 31A to 31D and to diagnose the operation states of the dampers 31A to 31D. Thus, the acceleration sensors 32A to 32D are connected to the control device 34. The acceleration sensors 32A to 32D form a vehicle body acceleration measurement unit configured to measure the vertical accelerations of the vehicle body 2, and to output signals corresponding to the accelerations to the control device 34. The sensor arrangement on the vehicle body 2 is not limited to the form in which the acceleration sensors 32A to 32D are arranged on the front left side, the front right side, the rear left side, and the rear right side of the vehicle body 2, and may be any form such as a form in which the acceleration sensors 32A to 32D are arranged at a center of a front portion, on a left side of a center portion, on a right side of the center portion, and at a center of a rear portion of the vehicle body 2. Moreover, the number of the acceleration sensors 32A to 32D is not limited to four, and may freely be selected in accordance with a purpose of the measurement and control. For example, two, three, or five or more acceleration sensors may be provided on the vehicle body 2.

Description is now given of the control device 34 which variably controls (adjusts) the damping force of each of the dampers 31A to 31D.

The control device 34 is installed at a position of the vehicle 1 (for example, a position substantially at the center of the vehicle body 2) determined in advance. The control device 34 includes, for example, a microcomputer and a drive circuit. An input side of the control device 34 is connected to the acceleration sensors 32A to 32D. An output side of the control device 34 is connected to the dampers 31A to 31D (more specifically, the control valves 37A to 37D). The control device 34 includes, as a storage unit, a memory 34A formed of a ROM, a RAM, a nonvolatile memory, and the like. In the memory 34A, for example, a processing program for controlling the damping forces of the dampers 31A to 31D is stored. Moreover, the control device 34 is connected to the higher-level control device (not shown) via the communication line 14. To the control device 34, the vehicle information on the vehicle 1 (for example, the current position L and the travel speed V of the vehicle) is input as the higher-level signals from the higher-level control device via the communication line 14. The acceleration sensors 32A to 32D may be connected to the higher-level control device, and the vertical accelerations may also be input as higher-level signals to the control device 34.

The control device 34 internally executes calculation based on the sensor signals acquired from the acceleration sensors 32A to 32D and the higher-level signals acquired via the communication line 14, to thereby output a drive current serving as a command signal to each of the dampers 31A to 31D (more specifically, each of the control valves 37A to 37D). That is, the control device 34 calculates the drive current corresponding to the damping force to be generated in each of the dampers 31A to 31D in accordance with a predetermined control law (damping control logic) while reading, for example, the detection signals from the acceleration sensors 32A to 32D after each sampling time. With this configuration, the control device 34 outputs the drive current to each of the control valves 37A to 37D, to thereby variably control the force to be generated by each of the dampers 31A to 31D. As the control law for each of the dampers 31A to 31D, for example, the skyhook control law, the LQG control law, or the H∞ control law may be used.

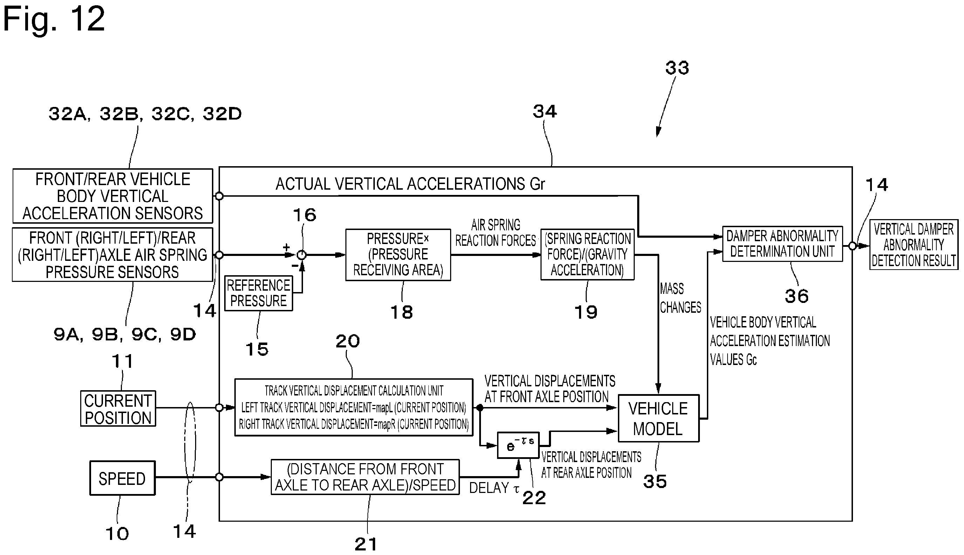

With reference to Fig. 12, description is now given of an operation state diagnostic device 33 which diagnoses the operation state of each of the dampers 31A to 31D. Description is now mainly given of portions different from the operation state diagnostic device 12 according to the first embodiment, and a detailed description of equivalent portions is omitted.

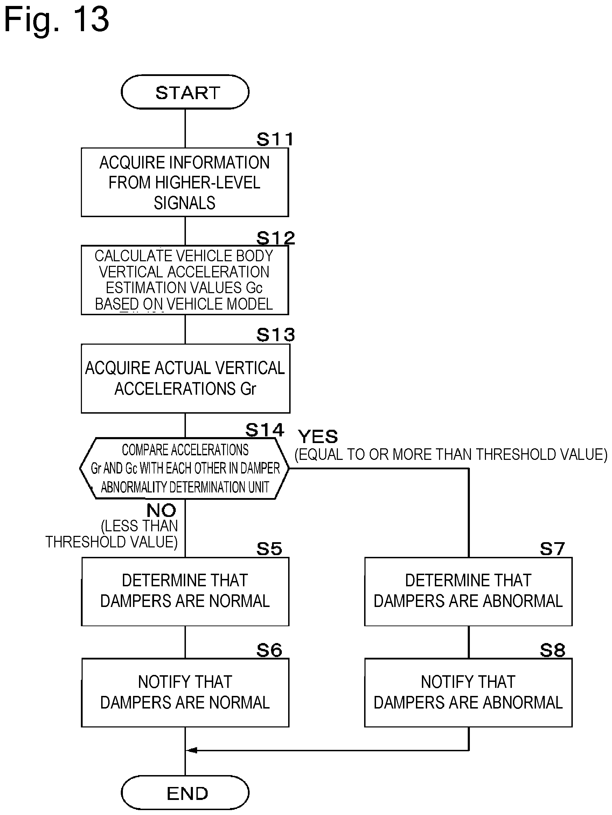

The operation state diagnostic device 33 according to the second embodiment diagnoses the operation states of the dampers 31A to 31D being the semi-active dampers. The operation state diagnostic device 33 includes pressure sensors 9A to 9D, the vehicle speed sensor 10, the position sensor 11, the acceleration sensors 32A to 32D, and the control device 34 serving as an arithmetic processing device which executes arithmetic processing for the diagnosis. The control device 34 serves as not only a control device which executes arithmetic processing for the control of the damping forces of the dampers 31A to 31D, but also a diagnostic device which executes the arithmetic processing for the diagnosis (abnormality determination) for the operation states of the dampers 31A to 31D. Thus, in the memory 34A of the control device 34, in addition to the processing program to be used to control the damping forces of the dampers 31A to 31D, a processing program for executing a processing flow illustrated in Fig. 13 described later, that is, a processing program to be used to diagnose the operation states of the dampers 31A to 31D, is also stored. Moreover, in the memory 34A of the control device 34, as in the above-mentioned first embodiment, the reference values, the determination values, the vehicle model, the track information (track map of each of the left and right wheels), and the like to be used to diagnose the operation states are stored.

To the control device 34, the pressures of the air springs 7A to 7D from the pressure sensors 9A to 9D, the travel speed (vehicle speed) of the vehicle 1 from the vehicle speed sensor 10, and the travel position (current position) of the vehicle 1 from the position sensor 11 are input via the communication line 14 in real time. In addition, to the control device 34, the vertical accelerations of the vehicle body 2 from the acceleration sensors 32A to 32D are also input in real time. That is, the control device 34 acquires, in real time, the signals of the pressure values from the pressure sensors 9A to 9D, the signal of the vehicle speed from the vehicle speed sensor 10, the signal of the travel position from the position sensor 11, and the signals of the vertical accelerations from the acceleration sensors 32A to 32D during the travel of the vehicle 1. The control device 34 determines the abnormality of each of the dampers 31A to 31D based on those signals. Specifically, the control device 34 executes processing of internally executing calculation based on the pressure values of the air springs 7A to 7D, the vehicle speed and the travel position of the vehicle 1, and the vertical accelerations of the vehicle body 2 to diagnose the operation states of the dampers 31A to 31D.

In this case, the control device 34 uses the "railway vehicle model" to estimate the vertical accelerations of the vehicle body 2 from the "vertical displacements of the tracks obtained from the position information" and the "mass changes in air spring reaction force calculated from the pressure values of the air springs 7A to 7D." Then, the control device 34 compares the estimation value of the vertical acceleration and the measurement value of the vertical acceleration measured by each of the acceleration sensors 32A to 32D with each other, to thereby determine the abnormality of each of the dampers 31A to 31D. That is, in the second embodiment, the vehicle model of the vehicle 1 is used to calculate, as the estimation value (acceleration estimation value), the vertical acceleration of the vehicle body 2 based on the travel speed and the current position of the vehicle 1 and the pressure sensor value of each of the air springs 7A to 7D delivered to the various devices included in the vehicle 1. Then, the estimation value and the measurement value of each of the acceleration sensors 32A to 32D used to control the damping force of each of the dampers 31A to 31D are compared with each other, to thereby determine the abnormality of each of the dampers 31A to 31D.

Thus, as illustrated in Fig. 12, the control device 34 includes a reference pressure output unit 15, a subtraction unit 16, a spring reaction force calculation unit 18, a mass change calculation unit 19, a track vertical displacement calculation unit 20 for a front axle position, a delay time calculation unit 21, a track vertical displacement calculation unit 22 for a rear axle position, an acceleration estimation unit 35 serving as a vehicle body acceleration estimation unit, and a damper abnormality determination unit 36 serving as a shock absorber abnormality determination unit.

The acceleration estimation unit 35 is arranged on the vehicle 1 together with the damper abnormality determination unit 36 and the like. To the acceleration estimation unit 35, the "mass changes $\Delta M$ of the vehicle body 2" are input from the mass change calculation unit 19, the "vertical displacements Sf of the tracks at the front axle position" are input from the track vertical displacement calculation unit 20, and the "vertical displacements Sr of the tracks at the rear axle position" are input from the track vertical displacement calculation unit 22. The acceleration estimation unit 35 receives the mass changes $\Delta M$ of the vehicle body 2, the vertical displacements Sf of the tracks at the front axle position, and the vertical displacements Sr of the tracks at the rear axle position as inputs, and uses the vehicle model to estimate the vertical acceleration of the vehicle body 2 through the calculation. The acceleration estimation unit 35 outputs those estimation values to the damper abnormality determination unit 36 as the vehicle body vertical acceleration estimation value Gc.

That is, the acceleration estimation unit 35 uses the "railway vehicle model obtained by modeling the vehicle 1," the "position information output from the position sensor 11 (more specifically, the vertical displacements Sf and Sr of the tracks obtained from the position information)," and the "pressure values P (more specifically, the mass changes $\Delta M$ calculated from the pressure values P) of the air springs 7A and 7B" to estimate the vertical acceleration of the vehicle body 2, and outputs the vertical acceleration to the damper abnormality determination unit 36. In more detail, the acceleration estimation unit 35 estimates the vertical acceleration of the vehicle body 2 through the calculation from the "railway vehicle model," the "vertical displacements Sf and Sr of the tracks obtained from the speed value of the vehicle 1 output from the vehicle speed sensor 10 and the position information," and the "second information (mass changes $\Delta M$) relating to the pressure values P." The acceleration estimation unit 35 outputs, to the damper abnormality determination unit 36, the estimated vertical acceleration of the vehicle body 2, that is, the vehicle body vertical acceleration estimation value Gc being the estimation value of the vertical acceleration of the vehicle body 2.

In this case, for example, the "vehicle model" as described in Patent Literature 1 may be used as the railway vehicle model. That is, the acceleration estimation unit 35 can use the railway model (state equations) as described in paragraph [0036] and the subsequent paragraphs and Fig. 3 of the drawings of Patent Literature 1 to estimate the vertical acceleration of the vehicle body 2 (to calculate the vehicle body vertical acceleration estimation value Gc). The acceleration estimation unit 35 may use a railway vehicle model (state equations) other than the model as described in Patent Literature 1. For example, a vehicle model (state equations) capable of more accurately obtaining the estimation values of the vertical acceleration of the vehicle body 2, that is, a vehicle model (state equations) more accurately corresponding to the structure of the vehicle 1, may be used.

To the damper abnormality determination unit 36, the measurement value of the vertical acceleration of the vehicle body 2 measured by each of the acceleration sensors 32A to 32D, that is, an actual vertical acceleration Gr, is input. Moreover, to the damper abnormality determination unit 36, the vehicle body vertical acceleration estimation value Gc is input from the acceleration estimation unit 35. The damper abnormality determination unit 36 compares the actual vertical acceleration Gr and the vehicle body vertical acceleration estimation value Gc with each other, to thereby determine whether each of the dampers 31A to 31D is normal or abnormal. That is, the damper abnormality determination unit 36 compares the actual vertical acceleration Gr being the measurement value of the vertical acceleration of the vehicle body 2 output from each of the acceleration sensors 32A to 32D and the vehicle body vertical acceleration estimation value Gc being the estimation value of the vertical acceleration of the vehicle body 2 output from the acceleration estimation unit 35 with each other, to thereby determine the abnormality. The damper abnormality determination unit 36 can determine that each of the dampers 31A to 31D is abnormal when, for example, a difference value between the actual vertical acceleration Gr and the vehicle body vertical acceleration estimation value Gc is equal to or larger than a threshold value G1 set in advance. The threshold value G1 is obtained in advance through calculation, experiments, simulation, or the like so that whether each of the dampers 31A to 31D is normal or abnormal can be accurately determined. The damper abnormality determination unit 36 outputs a result of determination of whether or not each of the dampers 31A to 31D is normal, that is, the vertical damper abnormality detection result, to the higher-level control device as diagnostic information of the control device 34. As a result, the higher-level control device can acquire the vertical damper abnormality detection result (whether or not each of the dampers 31A to 31D is normal).

The flowchart of Fig. 13 shows diagnostic processing (determination processing for the abnormality) executed in the control device 34. The processing of Fig. 13 is repeatedly executed at a predetermined control cycle (for example, every 10 msec) after the control device 34 is activated. Each step of processing of Fig. 13 equivalent to the processing step of Fig. 3 in the above-mentioned first embodiment is denoted by the same step number, and description thereof is omitted.

When the processing of Fig. 13 is started, in S 11, the control device 34 acquires the information, that is, the position information (current position L) on the vehicle 1, the speed value (travel speed V) of the vehicle 1, and the pressure values P being the internal pressures of the air springs 7A and 7B, from the higher-level signals. In S12, the control device 34 obtains the "vertical displacements Sf (Sfl and Sfr) of the tracks at the front axle position," the "vertical displacements Sr (Srl and Srr) of the tracks at the rear axle position," and the "mass changes ∆M" from the vehicle information (the current position L, the travel speed V, and the pressure values P) acquired in S11, and calculates the vehicle body vertical acceleration estimation values Gc based on the railway vehicle model. In S13, the control device 13 obtains the actual vertical accelerations Gr measured by the acceleration sensors 32A to 32D.

In S14, the control device 34 determines whether or not each of the dampers 31A to 31D is normal. In this case, in S14, the control device 34 compares each of the vehicle body vertical acceleration estimation values Gc calculated in S 12 and each of the actual vertical accelerations Gr obtained in S13 with each other. That is, in S14, the control device 34 determines whether or not, for example, the difference value between each of the vehicle body vertical acceleration estimation values Gc and each of the actual vertical accelerations Gr is equal to or larger than the threshold value G1. When a determination of "NO" is made in S14, that is, the difference value between each of the vehicle body vertical acceleration estimation values Gc and each of the actual vertical accelerations Gr is determined to be smaller than the threshold value G1 in S14, the process proceeds to S5. Meanwhile, when a determination of "YES" is made in S14, that is, the difference value between each of the vehicle body vertical acceleration estimation values Gc and each of the actual vertical accelerations Gr is determined to be equal to or larger than the threshold value G1 in S14, the process proceeds to S7.

In the processing step of S14, that is, when the damper abnormality determination unit 36 compares the vehicle body vertical acceleration estimation value Gc and the actual vertical acceleration Gr with each other, the comparison may always be made in real time, or average values within a period set in advance (specified period) may be compared with each other. Further, the damper abnormality determination unit 36 may determine that each of the dampers 31A to 31D is abnormal when an integrated value of the difference between the vehicle body vertical acceleration estimation value Gc and the actual vertical acceleration Gr is equal to or larger than a specified value. That is, the numerical value processing relating to the abnormality determination (diagnosis for the operation state) is not limited to the above-mentioned processing, such as the averaging processing and effective value processing for the acceleration values and the integration of the difference value. Moreover, for example, when all of the dampers 31A to 31D (four dampers 31A to 31D) are simultaneously determined to be abnormal, the possibility of this abnormal state is low, and hence it may be determined that a track abnormality occurs in the vehicle body 2. Further, when the difference value between the vehicle body vertical acceleration estimation value Gc and the actual vertical acceleration Gr is determined to be equal to or larger than the threshold value G1, the damper abnormality determination unit 36 may, for example, increase a section for the abnormality determination, may determine that the track is abnormal when the abnormality (the difference value is equal to or larger than the threshold value G1) occurs in only a specific section (short section) of the travel railroad line, and may determine that each of the dampers 31A to 31D is abnormal when the abnormality (the difference value is equal to or larger than the threshold value G1) occurs in the entire travel railroad line. That is, the track abnormality and the damper abnormality may be discriminated from each other. In any case, in the second embodiment, the abnormality determination (operation state diagnosis) for the dampers 31A to 31D can be highly accurately made in real time based on the information always flowing through the vehicle 1 as the higher-level signals and the information on the accelerations required for the damping control for the dampers 31A to 31D during the travel of the vehicle 1.

The second embodiment uses the above-mentioned control device 34 to determine the abnormality of each of the dampers 31A to 31D, and is not particularly different from the first embodiment in the basic actions. In particular, according to the second embodiment, the "actual vertical acceleration Gr being the measurement value of the vertical acceleration of the vehicle body 2" and the "vehicle body vertical acceleration estimation value Gc being the estimation value of the vertical acceleration of the vehicle body 2" are compared with each other, to thereby determine the abnormality. In this case, the measurement values output from the existing acceleration sensors 32A to 32D can be used as the measurement values of the vertical accelerations of the vehicle body 2. Moreover, the acceleration estimation unit 35 can use the pressure value P measured by each of the existing pressure sensors 9A and 9B and the position information acquired by the existing position sensor 11 to estimate the vehicle body vertical acceleration estimation value Gc. Further, the acceleration estimation unit 35 can use the railway vehicle model to estimate the vehicle body vertical acceleration estimation value Gc from the information on the tracks (the vertical displacements Sf and Sr of the tracks) at the position obtained from the position information, and hence the accuracy of the estimation can be increased. As a result, the accuracy of the determination of the abnormality can be increased while suppressing requirement for additional sensors.

In the second embodiment, the acceleration estimation unit 35 estimates the vehicle body vertical acceleration estimation value Gc from the "railway vehicle model," "each of the vertical displacements Sf and Sr of the tracks obtained from the speed value output from the vehicle speed sensor 10 and the position information acquired from the existing position sensor 11," and "each of the mass changes ΔM of the vehicle body 2 being the information relating to the pressure value P." Thus, the acceleration estimation unit 35 can use each of the vertical displacements Sf (Sfl and Sfr) of the tracks at the position corresponding to the axle on the front side (the bogie 3A on the front side) in the travel direction and each of the vertical displacements Sr (Srl and Srr) of the tracks at the position corresponding to the axle on the rear side (the bogie 3B on the rear side) in the travel direction to estimate the vehicle body vertical acceleration estimation value Gc. As a result, the estimation accuracy of the acceleration estimation unit 35 can be further increased.

In the second embodiment, description has been given of, as an example, the case of the configuration in which the speed value (travel speed V) output from the vehicle speed sensor 10 is used to calculate the vertical displacements Sr (Srl and Srr) of the tracks at the position corresponding to the axle on the rear side (bogie 3B on the rear side) in the travel direction. However, the configuration is not limited to this example. For example, the vehicle speed sensor 10 may be omitted, and the speed value (travel speed V) calculated from the position information (current position L) of the position sensor 11 may be used to calculate the vertical displacements Sr (Srl and Srr) of the tracks at the position corresponding to the axle on the rear side (bogie 3B on the rear side) in the travel direction.

That is, the vehicle body acceleration estimation unit may estimate the vertical acceleration of the vehicle body from the "railway vehicle model," the "vertical displacement of the track obtained from the speed value of the railway vehicle calculated from the position information and the position information," and the "information relating to the pressure value." Further, the vertical displacements of the tracks may be obtained without using the speed value.

In the second embodiment, description has been given of the case of, as an example, the configuration in which the calculation processing for the abnormal determination for the dampers 31A to 31D is also executed by the control device 34 which controls the damping forces of the dampers 31A to 31D. However, the configuration is not limited to this example, and a control device which executes the calculation processing for the control for the damping forces of the shock absorbers and a control device which executes the calculation processing for the abnormality determination for the shock absorbers may be provided independently of each other.

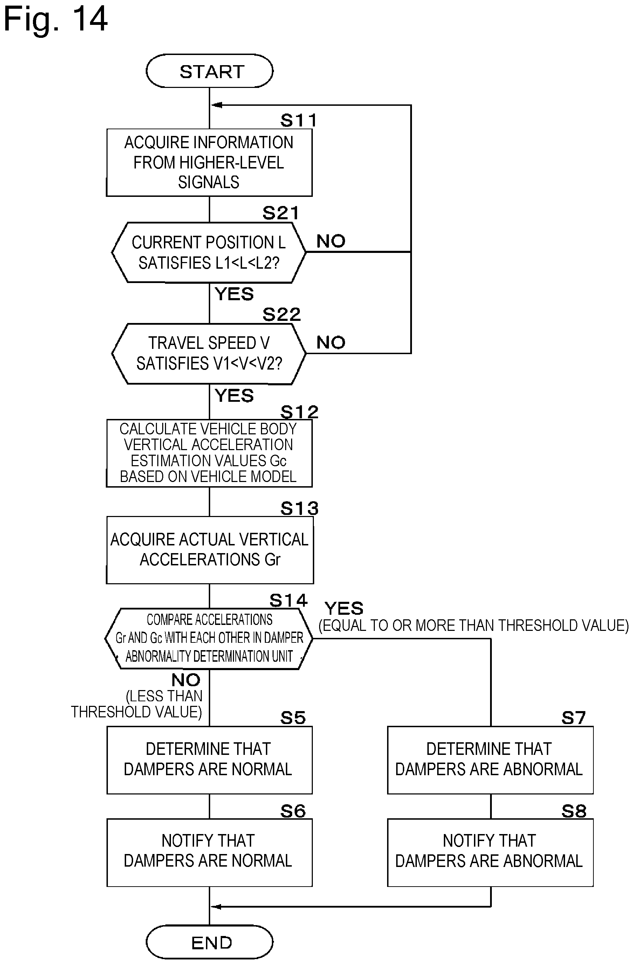

Further, for example, as in a seventh modification example illustrated in Fig. 14, the abnormality determination (operation state diagnosis) may be made when the vehicle 1 is traveling in a travel section (between L1 and L2) set in advance at a travel speed (between V1 and V2) set in advance. That is, in the seventh modification example, the control device 34 uses the vehicle body vertical acceleration estimation value Gc at the time when the position information (current position L) is within the range (L1<L<L2) set in advance, and the speed value (travel speed V) is within the range (V1<V<V2) set in advance, to thereby diagnose the operation state of each of the dampers 31A to 31D. Thus, in the seventh modification example, processing steps of S21 and S22 are added between S11 and S12 of Fig. 13 in the second embodiment. The processing steps of S21 and S22 are the same as those in the first modification example described above, and hence a further description is omitted.

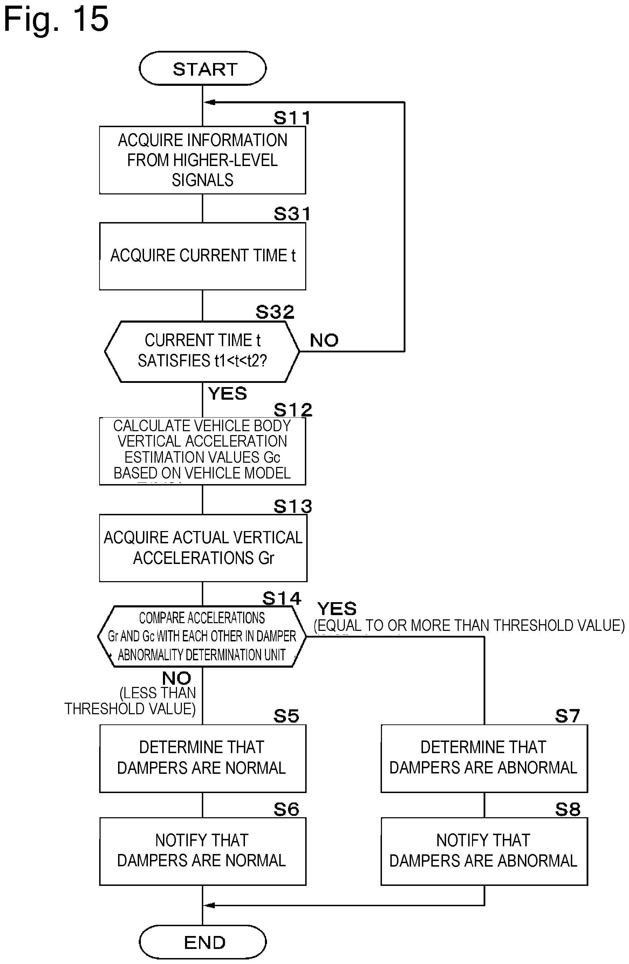

Further, for example, as in an eighth modification example illustrated in Fig. 15, the abnormality determination (operation state diagnosis) may be made during a period (between t1 and t2) set in advance. That is, in the eighth modification example, the control device 34 uses the vehicle body vertical acceleration estimation value Gc at the time when the current time is within the range (t1<t<t2) defined in advance, to thereby diagnose the operation state of each of the dampers 31A to 31D. Thus, in the eighth modification example, as illustrated in Fig. 15, processing steps of S31 and S32 are added between S11 and S12 of Fig. 13 in the second embodiment. The processing steps of S31 and S22 are the same as those in the second modification example described above, and hence a further description is omitted.

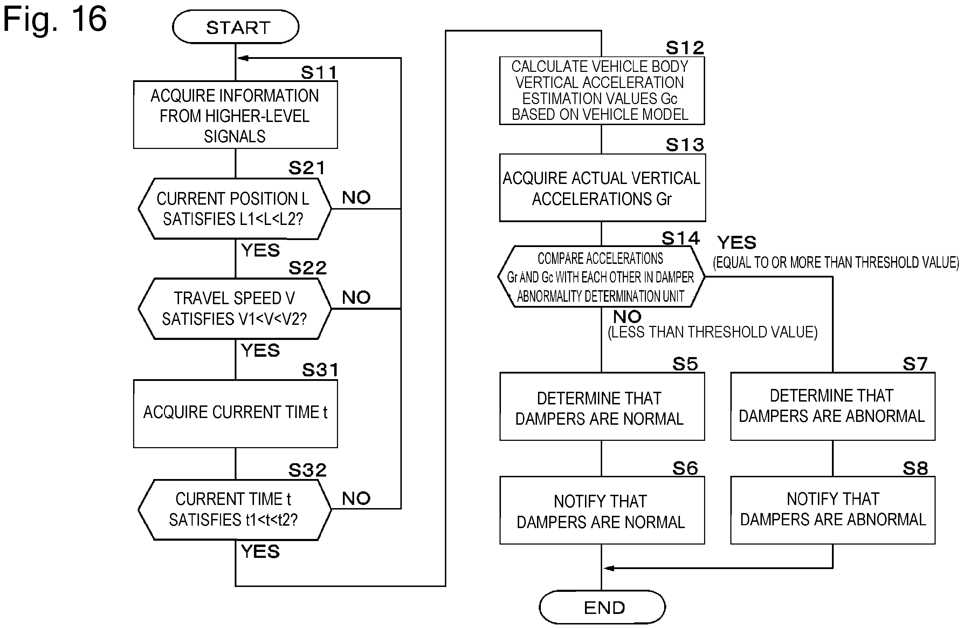

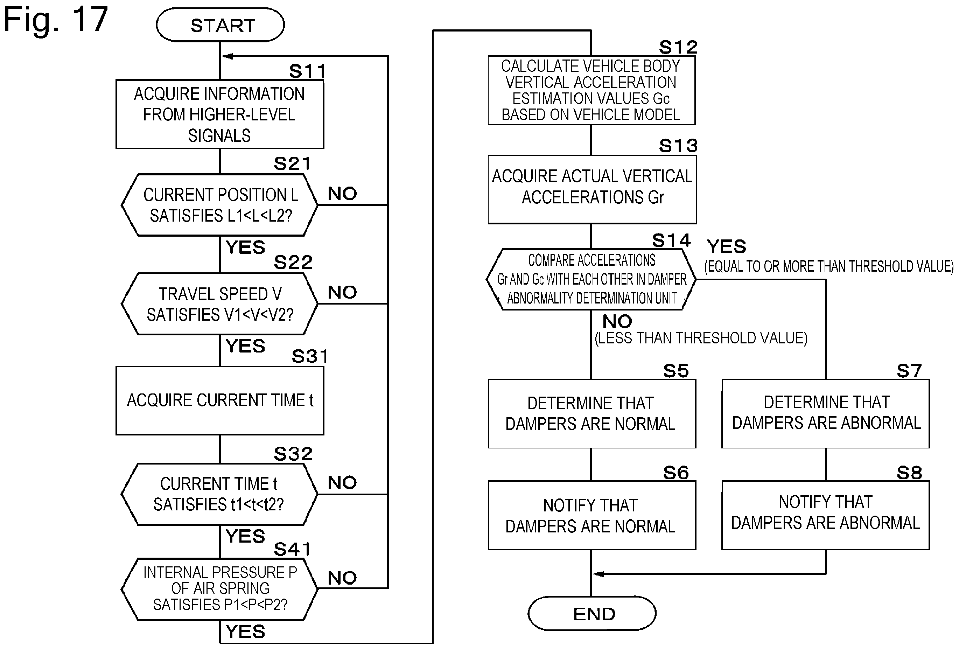

Moreover, for example, as in a ninth modification example illustrated in Fig. 16, the seventh modification example and the eighth modification example may be combined with each other. Further, as in a tenth modification example illustrated in Fig. 17, the abnormality determination (operation state diagnosis) may be made when the pressures of the air springs 7A and 7B are within a range (between P1 and P2) set in advance. That is, in the tenth modification example, the control device 34 uses the vehicle body vertical acceleration estimation value Gc at the time when the pressure P of each of the air springs 7A and 7B is within the range (P1<P<P2) set in advance, to thereby diagnose the operation state of each of the dampers 31A to 31D. Thus, in the tenth modification example, a processing step of S41 is added after the processing step of S32 in the ninth modification example illustrated in Fig. 16. The processing step of S41 is the same as that in the fourth modification example described above, and hence a further description is omitted.

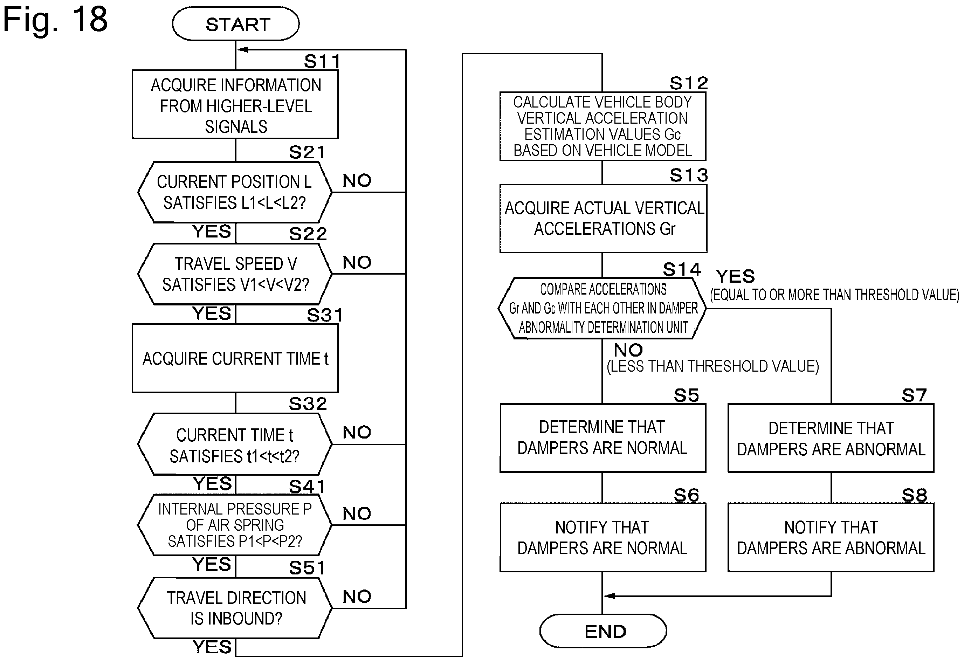

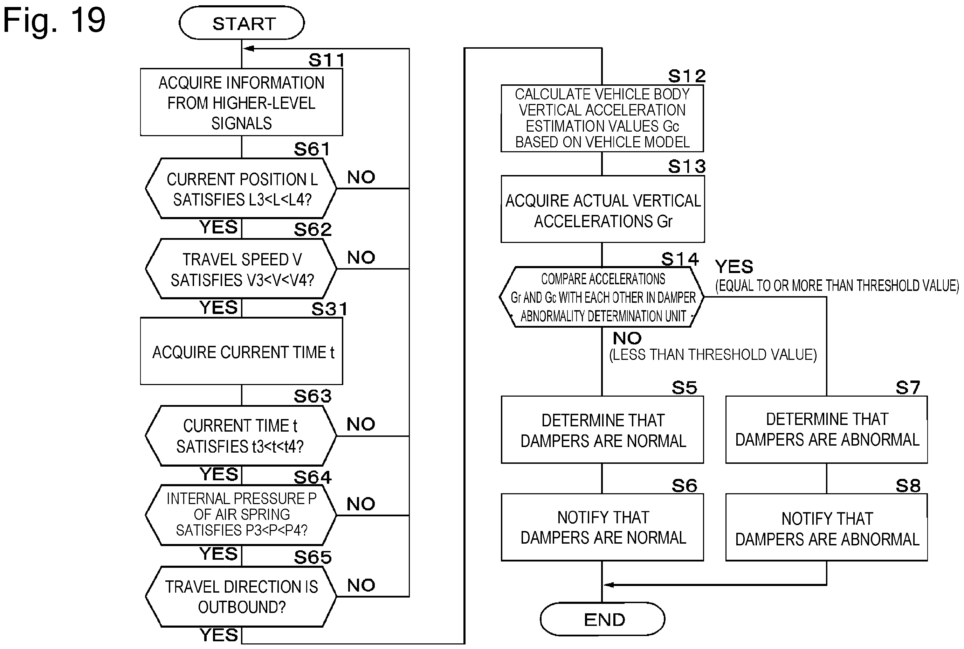

Moreover, as in an eleventh modification example illustrated in Fig. 18, the abnormality determination (operation state diagnosis) may be made when the vehicle 1 is traveling on the inbound line. In the eleventh modification example, a processing step of S51 is added in the course of the processing of the tenth modification example illustrated in Fig. 17. The processing step of S51 is the same as that in the fifth modification example described above, and hence a further description is omitted. Moreover, as in a twelfth modification example illustrated in Fig. 19, the abnormality determination (operation state diagnosis) may be made when the vehicle 1 is traveling on the outbound line. In the twelfth modification example, the processing steps of S21, S22, S32, S41, and S51 in the eleventh modification example illustrated in Fig. 18 are changed to processing steps of S61, S62, S63, S64, and S65. As a result, in the twelfth modification example, threshold values (L3, L4, V3, V4, t3, and t4) for the current position, the travel speed, and the like are changed between the inbound line and the outbound line. However, all of the threshold values are not required to be changed, and, for example, the threshold values for the time, the speed, and the like may be the same.

In the first embodiment, description has been given of, as an example, the case in which the dampers 8A and 8B are arranged in the vertical direction between the vehicle body 2 and the bogies 3A and 3B, that is, the case in which the dampers 8A and 8B are the vertical dampers. However, the type of the shock absorber is not limited to this example, and for example, various types of shock absorbers arranged between the vehicle body and the bogie can be used as the shock absorber, such as a horizontal damper arranged in the left-right direction between the vehicle body and the bogie and a yaw damper arranged in the front-rear direction (travel direction) between the vehicle body and the bogie. This also applies to the second embodiment, and the first modification example to the twelfth modification example.

In the first embodiment and the second embodiment, description has been given of, as an example, the case in which the spring mechanisms provided between the vehicle body 2 and the bogies 3A and 3B are the air springs 7A to 7D. However, the spring mechanism is not limited to this example, and for example, a spring mechanism other than the air spring (various types of springs and an elastic member), such as a coil spring, may be used as the spring mechanism. For example, when the spring mechanism is a coil spring, a pressure measurement unit such as a load sensor (strain sensor or strain gauge) can be used to measure a pressure value (stress value) of pressure (stress) loaded on the spring mechanism. This also applies to the first modification example to the twelfth modification example.

In the second embodiment, a description has been given of, as an example, the case in which the acceleration sensors 32A to 32D are provided on the vehicle body 2. However, the configuration is not limited to this example, and the acceleration sensors may be provided on the bogies. Moreover, the acceleration sensors may be provided on both of the vehicle body and the bogies.

In the second embodiment, description has been given of, as an example, the case of the configuration that the vertical accelerations (the actual vertical accelerations Gr and the vehicle body vertical acceleration estimation values Gc) of the vehicle body 2 are used to determine the abnormality. However, the configuration is not limited to this example, and for example, both of the "vertical accelerations (measurement values and estimation values) of the vehicle body" as in the second embodiment and the "vertical displacements (calculation values and estimation values) of the air springs" as in the first embodiment may be used to determine the abnormality. This also applies to the seventh modification example to the twelfth modification example. Moreover, also in the first embodiment and the first modification example to the sixth modification example, for example, the vehicle body acceleration measurement unit (acceleration sensors) may be provided on a vehicle to which conventional dampers are mounted, to thereby determine the abnormality through use of the vertical accelerations of the vehicle body, and both of the vertical accelerations of the vehicle body and the vertical displacements of the air springs may be used to determine the abnormality.

Further, each of the embodiments and the modification examples is an example, and it is to be understood that the configurations as described in the different embodiments can be partially replaced or combined.

As the operation state diagnostic device according to the embodiments described above, for example, the following aspects are conceivable.

As a first aspect, there is provided an operation state diagnostic device for a shock absorber arranged between a vehicle body and a bogie of a railway vehicle, the operation state diagnostic device including: a position detection unit configured to obtain position information on the bogie to output the position information; a pressure measurement unit configured to measure a pressure value of pressure loaded on a spring mechanism provided between the vehicle body and the bogie to output the pressure value; a spring mechanism displacement calculation unit configured to calculate a vertical displacement of the spring mechanism through use of the pressure value of the spring mechanism output from the pressure measurement unit to output the vertical displacement; a spring mechanism displacement estimation unit which is arranged on the railway vehicle, and is configured to estimate the vertical displacement of the spring mechanism through use of a railway vehicle model obtained by modeling the railway vehicle, the position information, and the pressure value of the spring mechanism to output the vertical displacement; and a shock absorber abnormality determination unit configured to determine an abnormality of the shock absorber by comparing a calculation value of the vertical displacement of the spring mechanism output from the spring mechanism displacement calculation unit and an estimation value of the vertical displacement of the spring mechanism output from the spring mechanism displacement estimation unit with each other.

According to this first aspect, the shock absorber abnormality determination unit determines the abnormality by comparing the calculation value of the vertical displacement of the spring mechanism output from the spring mechanism displacement calculation unit and the estimation value of the vertical displacement of the spring mechanism output from the spring mechanism displacement estimation unit with each other. In this case, the spring mechanism displacement calculation unit can use the pressure value measured by the existing pressure measurement unit to calculate the vertical displacement of the spring mechanism. Moreover, the spring mechanism displacement estimation unit can use the pressure value measured by the existing pressure measurement unit and the position information obtained by the existing position detection unit to estimate the vertical displacement of the spring mechanism. Further, the spring mechanism displacement estimation unit can use the railway vehicle model to estimate the vertical displacement of the spring mechanism from the information on the track (vertical displacement of the track) at the position obtained from the position information, and hence it is possible to increase the accuracy of the estimation value of the vertical displacement of the spring mechanism. As a result, the accuracy of the determination of the abnormality can be increased while suppressing the addition of measurement means (sensors).

As a second aspect, in the first aspect, the spring mechanism displacement estimation unit is configured to estimate the vertical displacement of the spring mechanism from the railway vehicle model, a vertical displacement of a track obtained from a speed value of the railway vehicle calculated from the position information and the position information, and information relating to the pressure value. According to this second aspect, the spring mechanism displacement estimation unit can use, from the speed value calculated from the position information and the position information, the vertical displacements of the tracks at the position corresponding to the axle on the front side (front axle) in the travel direction and the vertical displacements of the tracks at the position corresponding to the axle on the rear side (rear axle) in the travel direction to estimate the vertical displacement of each spring mechanism. As a result, the accuracy of the estimation value of the vertical displacement of the spring mechanism obtained by the spring mechanism displacement estimation unit can be further increased.

As a third aspect, in the first aspect, the operation state diagnostic device further includes a speed measurement unit configured to measure a speed value of the railway vehicle to output the speed value, and the spring mechanism displacement estimation unit is configured to estimate the vertical displacement of the spring mechanism from the railway vehicle model, a vertical displacement of a track obtained from the speed value output from the speed measurement unit and the position information, and information relating to the pressure value. According to this third aspect, the spring mechanism displacement estimation unit can use, from the speed value measured by the existing speed measurement unit and the position information, the vertical displacements of the tracks at the position corresponding to the axle on the front side (front axle) in the travel direction and the vertical displacements of the tracks at the position corresponding to the axle on the rear side (rear axle) in the travel direction to estimate the vertical displacement of each spring mechanism. As a result, the accuracy of the estimation value of the vertical displacement of the spring mechanism obtained by the spring mechanism displacement estimation unit can be further increased.

As a fourth aspect, there is provided an operation state diagnostic device for a shock absorber arranged between a vehicle body and a bogie of a railway vehicle, the operation state diagnostic device including: a vehicle body acceleration measurement unit configured to measure a vertical acceleration of the vehicle body to output the vertical acceleration; a position detection unit configured to obtain position information on the bogie to output the position information; a pressure measurement unit configured to measure a pressure value of pressure loaded on a spring mechanism provided between the vehicle body and the bogie to output the pressure value; a vehicle body acceleration estimation unit which is arranged on the railway vehicle, and is configured to estimate the vertical acceleration of the vehicle body through use of a railway vehicle model obtained by modeling the railway vehicle, the position information, and the pressure value of the spring mechanism to output the vertical acceleration; and a shock absorber abnormality determination unit configured to determine an abnormality of the shock absorber by comparing a measurement value of the vertical acceleration of the vehicle body output from the vehicle body acceleration measurement unit and an estimation value of the vertical acceleration of the vehicle body output from the vehicle body acceleration estimation unit with each other.

According to this fourth aspect, the shock absorber abnormality determination unit determines the abnormality by comparing the measurement value of the vertical acceleration of the vehicle body output from the vehicle body acceleration measurement unit and the estimation value of the vertical acceleration of the vehicle body output from the vehicle body acceleration estimation unit with each other. In this case, the measurement value output from the existing vehicle body acceleration measurement unit can be used as the measurement value of the vertical acceleration of the vehicle body. Moreover, the vehicle body acceleration estimation unit can use the pressure value measured by the existing pressure measurement unit and the position information obtained by the existing position detection unit to estimate the vertical acceleration of the vehicle body. Further, the vehicle body acceleration estimation unit can use the railway vehicle model to estimate the vertical acceleration of the vehicle body from the information on the track (vertical displacement of the track) at the position obtained from the position information, and hence it is possible to increase the accuracy of the estimation value of the vertical acceleration of the vehicle body. As a result, the accuracy of the determination of the abnormality can be increased while suppressing the addition of measurement means (sensors).

As a fifth aspect, in the fourth aspect, the vehicle body acceleration estimation unit is configured to estimate the vertical acceleration of the vehicle body from the railway vehicle model, a vertical displacement of a track obtained from a speed value of the railway vehicle calculated from the position information and the position information, and information relating to the pressure value. According to this fifth aspect, the vehicle body acceleration estimation unit can use, from the speed value calculated from the position information and the position information, the vertical displacements of the tracks at the position corresponding to the axle on the front side (front axle) in the travel direction and the vertical displacements of the tracks at the position corresponding to the axle on the rear side (rear axle) in the travel direction to estimate the vertical acceleration of the vehicle body. As a result, the accuracy of the estimation value of the vertical acceleration of the vehicle body obtained by the vehicle body acceleration estimation unit can be further increased.

As a sixth aspect, in the fourth aspect, the operation state diagnostic device further includes a speed measurement unit configured to measure a speed value of the railway vehicle to output the speed value, and the vehicle body acceleration estimation unit is configured to estimate the vertical acceleration of the vehicle body from the railway vehicle model, a vertical displacement of a track obtained from the speed value output from the speed measurement unit and the position information, and information relating to the pressure value. According to this sixth aspect, the vehicle body acceleration estimation unit can use, from the speed value measured by the existing speed measurement unit and the position information, the vertical displacements of the tracks at the position corresponding to the axle on the front side (front axle) in the travel direction and the vertical displacements of the tracks at the position corresponding to the axle on the rear side (rear axle) in the travel direction to estimate the vertical acceleration of the vehicle body. As a result, the accuracy of the estimation value of the vertical acceleration of the vehicle body obtained by the vehicle body acceleration estimation unit can be further increased.

As a seventh aspect, in any one of the first aspect to the sixth aspect, the operation state diagnostic device is configured to diagnose an operation state of the shock absorber through use of the estimation value at a time when a current time is within a range determined in advance. According to this seventh aspect, the operation state of the shock absorber can be diagnosed through use of the estimation value at the time when the travel condition of the railway vehicle is relatively constant, for example, early in the morning, late at night, or in the daytime. As a result, the accuracy of the determination of the abnormality can be increased also in this respect.

As an eighth aspect, in any one of the first aspect to the sixth aspect, the operation state diagnostic device is configured to diagnose an operation state of the shock absorber through use of the estimation value at a time when the position information is within a range determined in advance. According to this eighth aspect, the operation state of the shock absorber can be diagnosed through use of the estimation value in the travel section in which the track is stable, such as a straight section. As a result, the accuracy of the determination of the abnormality can be increased also in this respect.

As a ninth aspect, in any one of the first aspect to the sixth aspect, the operation state diagnostic device is configured to diagnose an operation state of the shock absorber through use of track information corresponding to a travel direction of the railway vehicle obtained from the position information. According to this ninth aspect, the estimation can be executed through use of the track information corresponding to whether the travel direction of the railway vehicle is inbound, outbound, inner, or outer. As a result, the accuracy of the determination of the abnormality can be increased also in this respect.

The present application claims a priority based on Japanese Patent Application No. 2020-020837 filed on February 10, 2020.

REFERENCE SIGNS LIST

1 vehicle (railway vehicle), 2 vehicle body, 3A, 3B bogie, 7A-7D air spring (spring mechanism), 8A, 8B, 31A-31D damper (shock absorber), 9A-9D pressure sensor (pressure measurement unit), 10 vehicle speed sensor (speed measurement unit), 11 position sensor (position detection unit), 12, 33 operation state diagnostic device, 17 spring displacement calculation unit (spring mechanism displacement calculation unit), 23 spring displacement estimation unit (spring mechanism displacement estimation unit), 24, 36 damper abnormality determination unit (shock absorber abnormality determination unit), 32A-32D acceleration sensor (vehicle body acceleration measurement unit), 35 acceleration estimation unit (vehicle body acceleration estimation unit), $\Delta F$ air spring reaction force (information), Gc vehicle body vertical acceleration estimation value (estimation value), Gr actual vertical acceleration (measurement value), L current position (position information), $\Delta M$ mass change (information), P pressure value, V travel speed (speed value), $\Delta X$ air spring displacement (calculation value), $\Delta Xc$ air spring displacement estimation value (estimation value)

**Claims**

1. An operation state diagnostic device (12, 33) for a shock absorber (8A, 8B, 31A - 31D) arranged between a vehicle body (2) and a bogie (3A, 3B) of a railway vehicle (1), the operation state diagnostic device (12, 33) comprising:

   a position detection unit (11) configured to obtain a travel position of the railway vehicle (1) to output the travel position;
   a pressure measurement unit (9A - 9D) configured to measure a pressure value of pressure loaded on a spring mechanism (7A - 7D) provided between the vehicle body (2) and the bogie (3A, 3B) to output the pressure value;
   a spring mechanism displacement calculation unit (17) configured to calculate a vertical displacement of the spring mechanism (7A - 7D) through use of the pressure value of the spring mechanism (7A - 7D) output from the pressure measurement unit (9A - 9D) to output the vertical displacement;
   a spring mechanism displacement estimation unit (23) which is arranged on the railway vehicle (1), and is configured to estimate the vertical displacement of the spring mechanism (7A - 7D) through use of a railway vehicle model obtained by modeling the railway vehicle (1), the travel position, and the pressure value of the spring mechanism (7A - 7D) to output the vertical displacement; and
   a shock absorber abnormality determination unit (24, 36) configured to determine an abnormality of the shock absorber (8A, 8B, 31A - 31D) by comparing a calculation value of the vertical displacement of the spring mechanism (7A - 7D) output from the spring mechanism displacement calculation unit (17) and an estimation value of the vertical displacement of the spring mechanism (7A - 7D) output from the spring mechanism displacement estimation unit (23) with each other.

2. The operation state diagnostic device (12, 33) according to claim 1, wherein the spring mechanism displacement estimation unit (23) is configured to estimate the vertical displacement of the spring mechanism (7A - 7D) from the railway vehicle model, a vertical displacement of a track obtained from a speed value of the railway vehicle (1) calculated from the travel position and the travel position, and information relating to the pressure value.

3. The operation state diagnostic device (12, 33) according to claim 1, further comprising a speed measurement unit (10) configured to measure a speed value of the railway vehicle (1) to output the speed value,
   wherein the spring mechanism displacement estimation unit (23) is configured to estimate the vertical displacement of the spring mechanism (7A - 7D) from the railway vehicle model, a vertical displacement of a track obtained from the speed value output from the speed measurement unit (10) and the travel position, and information relating to the pressure value.

4. An operation state diagnostic device (12, 33) for a shock absorber (8A, 8B, 31A - 31D) arranged between a vehicle body (2) and a bogie (3A, 3B) of a railway vehicle (1), the operation state diagnostic device (12, 33) comprising:

   a vehicle body acceleration measurement unit (32A - 32D) configured to measure a vertical acceleration of the vehicle body (2) to output the vertical acceleration;

a position detection unit (11) configured to obtain a travel position of the railway vehicle (1) to output the travel position;

a pressure measurement unit (9A - 9D) configured to measure a pressure value of pressure loaded on a spring mechanism (7A - 7D) provided between the vehicle body (2) and the bogie (3A, 3B) to output the pressure value;

a vehicle body acceleration estimation unit (35) which is arranged on the railway vehicle (1), and is configured to estimate the vertical acceleration of the vehicle body (2) through use of a railway vehicle model obtained by modeling the railway vehicle (1), the travel position, and the pressure value of the spring mechanism (7A - 7D) to output the vertical acceleration; and

a shock absorber abnormality determination unit (24, 36) configured to determine an abnormality of the shock absorber (8A, 8B, 31A - 31D) by comparing a measurement value of the vertical acceleration of the vehicle body (2) output from the vehicle body acceleration measurement unit (32A - 32D) and an estimation value of the vertical acceleration of the vehicle body (2) output from the vehicle body acceleration estimation unit (35) with each other.

5. The operation state diagnostic device (12, 33) according to claim 4, wherein the vehicle body acceleration estimation unit (35) is configured to estimate the vertical acceleration of the vehicle body (2) from the railway vehicle model, a vertical displacement of a track obtained from a speed value of the railway vehicle (1) calculated from the travel position and the travel position, and information relating to the pressure value.

6. The operation state diagnostic device (12, 33) according to claim 4, further comprising a speed measurement unit (10) configured to measure a speed value of the railway vehicle (1) to output the speed value,

wherein the vehicle body acceleration estimation unit (35) is configured to estimate the vertical acceleration of the vehicle body (2) from the railway vehicle model, a vertical displacement of a track obtained from the speed value output from the speed measurement unit (10) and the travel position, and information relating to the pressure value.

7. The operation state diagnostic device (12, 33) according to any one of claims 1 to 6, wherein the operation state diagnostic device (12, 33) is configured to diagnose an operation state of the shock absorber (8A, 8B, 31A - 31D) through use of the estimation value at a time when a current time is within a range determined in advance.

8. The operation state diagnostic device (12, 33) according to any one of claims 1 to 6, wherein the operation state diagnostic device (12, 33) is configured to diagnose an operation state of the shock absorber (8A, 8B, 31A - 31D) through use of the estimation value at a time when the travel position is within a range determined in advance.

9. The operation state diagnostic device (12, 33) according to any one of claims 1 to 6, wherein the operation state diagnostic device (12, 33) is configured to diagnose an operation state of the shock absorber (8A, 8B, 31A - 31D) through use of a vertical displacement of a track corresponding to a travel direction of the railway vehicle (1) obtained from the travel position.

**Patentansprüche**

1. Diagnosevorrichtung für Betriebszustand (12, 33) für einen Stoßdämpfer (8A, 8B, 31A - 31D), der zwischen einem Fahrzeugkörper (2) und einem Drehgestell (3A, 3B) eines Schienenfahrzeugs (1) angeordnet ist, wobei die Diagnosevorrichtung für Betriebszustand (12, 33) Folgendes umfasst:

eine Positionserkennungseinheit (11), die konfiguriert ist zum Erhalten einer Fahrposition des Schienenfahrzeugs (1), um die Fahrposition auszugeben;

eine Druckmesseinheit (9A - 9D), die konfiguriert ist zum Messen eines Druckwerts von Druck, der einen Federmechanismus (7A - 7D) belastet, der zwischen dem Fahrzeugkörper (2) und dem Drehgestell (3A, 3B) bereitgestellt ist, um den Druckwert auszugeben;

eine Federmechanismusverlagerungs-Berechnungseinheit (17), die konfiguriert ist zum Berechnen einer vertikalen Verlagerung des Federmechanismus (7A - 7D) durch Verwenden des Druckwerts des Federmechanismus (7A - 7D), der von der Druckmesseinheit (9A - 9D) ausgegeben wurde, um die vertikale Verlagerung auszugeben;

eine Federmechanismusverlagerungs-Abschätzeinheit (23), die auf dem Schienenfahrzeug (1) angeordnet ist und konfiguriert ist zum Abschätzen der vertikalen Verlagerung des Federmechanismus (7A - 7D) durch Verwenden eines Schienenfahrzeugmodells, das durch Modellieren des Schienenfahrzeugs (1) erhalten wurde, der Fahrposition und des Druckwerts des Federmechanismus (7A - 7D), um die vertikale Verlagerung auszugeben; und

eine Stoßdämpfer-Anomaliebestimmungseinheit (24, 36), die konfiguriert ist zum Bestimmen einer Anomalie des Stoßdämpfers (8A, 8B, 31A - 31D) durch Vergleichen eines Berechnungswerts der vertikalen Verlagerung des Federmechanismus (7A - 7D), der aus der Federmechanismusverlagerungs-Berechnungseinheit (17) ausgegeben wurde, und eines Schätzwerts der vertikalen Verlagerung des Federmechanismus (7A - 7D), der von der Federmechanismusverlagerungs-Abschätzeinheit (23) ausgegeben wurde, miteinander.

2. Diagnosevorrichtung für Betriebszustand (12, 33) nach Anspruch 1, wobei die Federmechanismusverlagerungs-Abschätzeinheit (23) konfiguriert ist zum Abschätzen der vertikalen Verlagerung des Federmechanismus (7A - 7D) aus dem Schienenfahrzeugmodell, einer vertikalen Verlagerung eines Gleises, die aus einem Geschwindigkeitswert des Schienenfahrzeugs (1) erhalten wurde, der aus der Fahrposition berechnet wurde, und der Fahrposition und Informationen in Bezug auf den Druckwert.

3. Diagnosevorrichtung für Betriebszustand (12, 33) nach Anspruch 1, weiter umfassend eine Geschwindigkeitsmesseinheit (10), die konfiguriert ist zum Messen eines Geschwindigkeitswerts des Schienenfahrzeugs (1), um den Geschwindigkeitswert auszugeben,
wobei die Federmechanismusverlagerungs-Abschätzeinheit (23) konfiguriert ist zum Abschätzen der vertikalen Verlagerung des Federmechanismus (7A - 7D) aus dem Schienenfahrzeugmodell, einer vertikalen Verlagerung eines Gleises, die aus dem Geschwindigkeitswert erhalten wurde, der von der Geschwindigkeitsmesseinheit (10) ausgegeben wurde, und der Fahrposition und Informationen in Bezug auf den Druckwert.

4. Diagnosevorrichtung für Betriebszustand (12, 33) für einen Stoßdämpfer (8A, 8B, 31A - 31D), der zwischen einem Fahrzeugkörper (2) und einem Drehgestell (3A, 3B) eines Schienenfahrzeugs (1) angeordnet ist, wobei die Diagnosevorrichtung für Betriebszustand (12, 33) Folgendes umfasst:

eine Fahrzeugkörperbeschleunigungs-Messeinheit (32A - 32D), die konfiguriert ist zum Messen einer vertikalen Beschleunigung des Fahrzeugkörpers (2), um die vertikale Beschleunigung auszugeben;
eine Positionserkennungseinheit (11), die konfiguriert ist zum Erhalten einer Fahrposition des Schienenfahrzeugs (1), um die Fahrposition auszugeben;
eine Druckmesseinheit (9A - 9D), die konfiguriert ist zum Messen eines Druckwerts von Druck, der einen Federmechanismus (7A - 7D) belastet, der zwischen dem Fahrzeugkörper (2) und dem Drehgestell (3A, 3B) bereitgestellt ist, um den Druckwert auszugeben;
eine Fahrzeugkörperbeschleunigungs-Abschätzeinheit (35), die auf dem Schienenfahrzeug (1) angeordnet ist und konfiguriert ist zum Abschätzen der vertikalen Beschleunigung des Fahrzeugkörpers (2) durch Verwenden eines Schienenfahrzeugmodells, das durch Modellieren des Schienenfahrzeugs (1) erhalten wurde, der Fahrposition und des Druckwerts des Federmechanismus (7A - 7D), um die vertikale Beschleunigung auszugeben; und
eine Stoßdämpfer-Anomaliebestimmungseinheit (24, 36), die konfiguriert ist zum Bestimmen einer Anomalie des Stoßdämpfers (8A, 8B, 31A - 31D) durch Vergleichen eines Messwerts der vertikalen Beschleunigung des Fahrzeugkörpers (2), der von der Fahrzeugkörperbeschleunigungs-Messeinheit (32A - 32D) ausgegeben wurde, und eines Schätzwerts der vertikalen Beschleunigung des Fahrzeugkörpers (2), der von der Fahrzeugkörperbeschleunigungs-Abschätzeinheit (35) ausgegeben wurde, miteinander.

5. Diagnosevorrichtung für Betriebszustand (12, 33) nach Anspruch 4, wobei die Fahrzeugkörperbeschleunigungs-Abschätzeinheit (35) konfiguriert ist zum Abschätzen der vertikalen Beschleunigung des Fahrzeugkörpers (2) aus dem Schienenfahrzeugmodell, einer vertikalen Verlagerung eines Gleises, die aus einem Geschwindigkeitswert des Schienenfahrzeugs (1) erhalten wurde, der aus der Fahrposition berechnet wurde, und der Fahrposition und Informationen in Bezug auf den Druckwert.

6. Diagnosevorrichtung für Betriebszustand (12, 33) nach Anspruch 4, weiter umfassend eine Geschwindigkeitsmesseinheit (10), die konfiguriert ist zum Messen eines Geschwindigkeitswerts des Schienenfahrzeugs (1), um den Geschwindigkeitswert auszugeben,
wobei die Fahrzeugkörperbeschleunigungs-Abschätzeinheit (35) konfiguriert ist zum Abschätzen der vertikalen Beschleunigung des Fahrzeugkörpers (2) aus dem Schienenfahrzeugmodell, einer vertikalen Verlagerung eines Gleises, die aus dem Geschwindigkeitswert erhalten wurde, der von der Geschwindigkeitsmesseinheit (10) ausgegeben wurde, und der Fahrposition und Informationen in Bezug auf den Druckwert.

7. Diagnosevorrichtung für Betriebszustand (12, 33) nach einem der Ansprüche 1 bis 6, wobei die Diagnosevorrichtung für Betriebszustand (12, 33) konfiguriert ist zum Diagnostizieren eines Betriebszustands des Stoßdämpfers (8A, 8B, 31A - 31D) durch Verwenden des Schätzwerts zu einem Zeitpunkt, wenn ein aktueller Zeitpunkt innerhalb eines zuvor bestimmten Bereichs liegt.

**8.** Diagnosevorrichtung für Betriebszustand (12, 33) nach einem der Ansprüche 1 bis 6, wobei die Diagnosevorrichtung für Betriebszustand (12, 33) konfiguriert ist zum Diagnostizieren eines Betriebszustands des Stoßdämpfers (8A, 8B, 31A - 31D) durch Verwenden des Schätzwerts zu einem Zeitpunkt, wenn die Fahrposition innerhalb eines zuvor bestimmten Bereichs liegt.

**9.** Diagnosevorrichtung für Betriebszustand (12, 33) nach einem der Ansprüche 1 bis 6, wobei die Diagnosevorrichtung für Betriebszustand (12, 33) konfiguriert ist zum Diagnostizieren eines Betriebszustands des Stoßdämpfers (8A, 8B, 31A - 31D) durch Verwenden einer vertikalen Verlagerung eines Gleises, die einer Fahrtrichtung des Schienenfahrzeugs (1) entspricht, die aus der Fahrposition erhalten wurde.

**Revendications**

**1.** Dispositif (12, 33) de diagnostic d'état de fonctionnement pour un amortisseur (8A, 8B, 31A à 31D) disposé entre une caisse (2) de véhicule et un bogie (3A, 3B) d'un véhicule ferroviaire (1), le dispositif (12, 33) de diagnostic d'état de fonctionnement comprenant :

une unité (11) de détection de position configurée pour obtenir une position de déplacement du véhicule ferroviaire (1) pour émettre la position de déplacement ;
une unité (9A à 9D) de mesure de pression configurée pour mesurer une valeur de pression exercée sur un mécanisme à ressort (7A à 7D) disposé entre la caisse (2) de véhicule et le bogie (3A, 3B) pour émettre la valeur de pression ;
une unité (17) de calcul de déplacement de mécanisme à ressort configurée pour calculer un déplacement vertical du mécanisme à ressort (7A à 7D) par l'utilisation de la valeur de pression du mécanisme à ressort (7A à 7D) émise par l'unité (9A à 9D) de mesure de pression pour émettre le déplacement vertical ;
une unité (23) d'estimation de déplacement de mécanisme à ressort qui est disposée sur le véhicule ferroviaire (1) et est configurée pour estimer le déplacement vertical du mécanisme à ressort (7A à 7D) par l'utilisation d'un modèle de véhicule ferroviaire obtenu par la modélisation du véhicule ferroviaire (1), de la position de déplacement et de la valeur de pression du mécanisme à ressort (7A à 7D) pour émettre le déplacement vertical ; et
une unité (24, 36) de détermination d'anomalie d'amortisseur configurée pour déterminer une anomalie de l'amortisseur (8A, 8B, 31A à 31D) par la comparaison d'une valeur de calcul du déplacement vertical du mécanisme à ressort (7A à 7D) émise par l'unité (17) de calcul de déplacement de mécanisme à ressort et d'une valeur d'estimation du déplacement vertical du mécanisme à ressort (7A à 7D) émis par l'unité (23) d'estimation de déplacement de mécanisme à ressort l'une à l'autre.

**2.** Dispositif (12, 33) de diagnostic d'état de fonctionnement selon la revendication 1, dans lequel l'unité (23) d'estimation de déplacement de mécanisme à ressort est configurée pour estimer le déplacement vertical du mécanisme à ressort (7A à 7D) à partir du modèle de véhicule ferroviaire, d'un déplacement vertical d'une voie obtenu à partir d'une valeur de vitesse du véhicule ferroviaire (1) calculée à partir de la position de déplacement et de la position de déplacement, et d'informations relatives à la valeur de pression.

**3.** Dispositif (12, 33) de diagnostic d'état de fonctionnement selon la revendication 1, comprenant en outre une unité (10) de mesure de vitesse configurée pour mesurer une valeur de vitesse du véhicule ferroviaire (1) pour émettre la valeur de vitesse,
dans lequel l'unité (23) d'estimation de déplacement de mécanisme à ressort est configurée pour estimer le déplacement vertical du mécanisme à ressort (7A à 7D) à partir du modèle de véhicule ferroviaire, d'un déplacement vertical d'une voie obtenu à partir de la valeur de vitesse émise par l'unité (10) de mesure de vitesse et de la position de déplacement, et d'informations relatives à la valeur de la pression.

**4.** Dispositif (12, 33) de diagnostic d'état de fonctionnement pour un amortisseur (8A, 8B, 31A à 31D) disposé entre une caisse (2) de véhicule et un bogie (3A, 3B) d'un véhicule ferroviaire (1), le dispositif (12, 33) de diagnostic d'état de fonctionnement comprenant :

une unité (32A à 32D) de mesure d'accélération de caisse de véhicule configurée pour mesurer une accélération verticale de la caisse (2) de véhicule afin d'émettre l'accélération verticale ;
une unité (11) de détection de position configurée pour obtenir une position de déplacement du véhicule ferroviaire (1) pour émettre la position de déplacement ;
une unité (9A à 9D) de mesure de pression configurée pour mesurer une valeur de pression exercée sur un mécanisme à ressort (7A à 7D) disposé entre la caisse (2) de véhicule et le bogie (3A, 3B) afin d'émettre la valeur de pression ;
une unité (35) d'estimation d'accélération de caisse de véhicule qui est disposée sur le véhicule ferroviaire (1) et est configurée pour estimer l'accélération verticale de la caisse (2) de véhicule par l'utilisation d'un modèle de véhicule ferroviaire obtenu par la modélisation du véhicule ferroviaire (1), de la position de déplacement et de la valeur de pression du mécanisme à ressort (7A à 7D) pour émettre l'accélération verticale ; et

une unité (24, 36) de détermination d'anomalie d'amortisseur configurée pour déterminer une anomalie de l'amortisseur (8A, 8B, 31A à 31D) par la comparaison d'une valeur de mesure de l'accélération verticale de la caisse (2) de véhicule émise par l'unité (32A à 32D) de mesure d'accélération de caisse de véhicule et d'une valeur d'estimation de l'accélération verticale de la caisse (2) de véhicule émise par l'unité (35) d'estimation d'accélération de caisse de véhicule l'une à l'autre.

5. Dispositif (12, 33) de diagnostic d'état de fonctionnement selon la revendication 4, dans lequel l'unité (35) d'estimation d'accélération de caisse de véhicule est configurée pour estimer l'accélération verticale de la caisse (2) de véhicule à partir du modèle de véhicule ferroviaire, d'un déplacement vertical d'une voie obtenu à partir d'une valeur de vitesse du véhicule ferroviaire (1) calculée à partir de la position de déplacement et de la position de déplacement, et d'informations relatives à la valeur de pression.

6. Dispositif (12, 33) de diagnostic d'état de fonctionnement selon la revendication 4, comprenant en outre une unité (10) de mesure de vitesse configurée pour mesurer une valeur de vitesse du véhicule ferroviaire (1) pour émettre la valeur de vitesse, dans lequel l'unité (35) d'estimation d'accélération de caisse de véhicule est configurée pour estimer l'accélération verticale de la caisse (2) de véhicule à partir du modèle de véhicule ferroviaire, d'un déplacement vertical d'une voie obtenu à partir de la valeur de vitesse émise par l'unité (10) de mesure de vitesse et de la position de déplacement, et d'informations relatives à la valeur de la pression.

7. Dispositif (12, 33) de diagnostic d'état de fonctionnement selon l'une quelconque des revendications 1 à 6, dans lequel le dispositif (12, 33) de diagnostic d'état de fonctionnement est configuré pour diagnostiquer un état de fonctionnement de l'amortisseur (8A, 8B, 31A à 31D) par l'utilisation de la valeur d'estimation à un instant où un temps courant se situe dans une plage déterminée à l'avance.

8. Dispositif (12, 33) de diagnostic d'état de fonctionnement selon l'une quelconque des revendications 1 à 6, dans lequel le dispositif (12, 33) de diagnostic d'état de fonctionnement est configuré pour diagnostiquer un état de fonctionnement de l'amortisseur (8A, 8B, 31A à 31D) par l'utilisation de la valeur d'estimation à un instant où la position de déplacement se situe dans une plage déterminée à l'avance.

9. Dispositif (12, 33) de diagnostic d'état de fonctionnement selon l'une quelconque des revendications 1 à 6, dans lequel le dispositif (12, 33) de diagnostic d'état de fonctionnement est configuré pour diagnostiquer un état de fonctionnement de l'amortisseur (8A, 8B, 31A à 31D) par l'utilisation d'un déplacement vertical d'une voie correspondant à une direction de déplacement du véhicule ferroviaire (1) obtenu à partir de la position de déplacement.

## Fig. 1

EP 4 105 098 B1

# Fig. 2

EP 4 105 098 B1

EP 4 105 098 B1

# Fig. 3

```
                    START
                      |
                      | S1
         ACQUIRE INFORMATION
           FROM HIGHER-LEVEL
                SIGNALS
                      |
                      | S2
          CALCULATE AIR SPRING
       DISPLACEMENT ESTIMATION
          VALUES ΔXc BASED ON
             VEHICLE MODEL
                      |
                      | S3
          CALCULATE AIR SPRING
         DISPLACEMENTS ΔX FROM
      PRESSURE RECEIVING AREAS
         AND SPRING CONSTANTS
                      |
                      | S4          YES
      COMPARE AIR SPRING DISPLACEMENTS      (EQUAL TO OR MORE THAN THRESHOLD VALUE)
    ΔX AND ΔXc WITH EACH OTHER IN DAMPER
      ABNORMALITY DETERMINATION UNIT
                      |
                     NO
                (LESS THAN
            THRESHOLD VALUE)
                      | S5                          | S7
           DETERMINE THAT                  DETERMINE THAT
        DAMPERS ARE NORMAL            DAMPERS ARE ABNORMAL
                      | S6                          | S8
            NOTIFY THAT                    NOTIFY THAT
        DAMPERS ARE NORMAL            DAMPERS ARE ABNORMAL
                      |
                    END
```

28

# Fig. 4

START

**S1** — ACQUIRE INFORMATION FROM HIGHER-LEVEL SIGNALS

**S21** — CURRENT POSITION L SATISFIES L1<L<L2? → NO

YES

**S22** — TRAVEL SPEED V SATISFIES V1<V<V2? → NO

YES

**S2** — CALCULATE AIR SPRING DISPLACEMENT ESTIMATION VALUES ΔXc BASED ON VEHICLE MODEL

**S3** — CALCULATE AIR SPRING DISPLACEMENTS ΔX FROM PRESSURE RECEIVING AREAS AND SPRING CONSTANTS

**S4** — COMPARE AIR SPRING DISPLACEMENTS ΔX AND ΔXc WITH EACH OTHER IN DAMPER ABNORMALITY DETERMINATION UNIT

YES (EQUAL TO OR MORE THAN THRESHOLD VALUE)

NO (LESS THAN THRESHOLD VALUE)

**S5** — DETERMINE THAT DAMPERS ARE NORMAL

**S6** — NOTIFY THAT DAMPERS ARE NORMAL

**S7** — DETERMINE THAT DAMPERS ARE ABNORMAL

**S8** — NOTIFY THAT DAMPERS ARE ABNORMAL

END

# Fig. 5

START

**S1**
ACQUIRE INFORMATION
FROM HIGHER-LEVEL
SIGNALS

**S31**
ACQUIRE CURRENT TIME t

**S32**
CURRENT TIME t
SATISFIES t1<t<t2?  — NO

YES
**S2**
CALCULATE AIR SPRING
DISPLACEMENT ESTIMATION
VALUES ΔXc BASED ON
VEHICLE MODEL

**S3**
CALCULATE AIR SPRING
DISPLACEMENTS ΔX FROM
PRESSURE RECEIVING AREAS
AND SPRING CONSTANTS

**S4**
COMPARE AIR SPRING DISPLACEMENTS
ΔX AND ΔXc WITH EACH OTHER IN DAMPER
ABNORMALITY DETERMINATION UNIT

YES
(EQUAL TO OR MORE THAN THRESHOLD VALUE)

**NO**
(LESS THAN
THRESHOLD VALUE)

**S5**
DETERMINE THAT
DAMPERS ARE NORMAL

**S7**
DETERMINE THAT
DAMPERS ARE ABNORMAL

**S6**
NOTIFY THAT
DAMPERS ARE NORMAL

**S8**
NOTIFY THAT
DAMPERS ARE ABNORMAL

END

# Fig. 6

START

**S1** — ACQUIRE INFORMATION FROM HIGHER-LEVEL SIGNALS

**S21** — CURRENT POSITION L SATISFIES L1<L<L2? — NO / YES

**S22** — TRAVEL SPEED V SATISFIES V1<V<V2? — NO / YES

**S31** — ACQUIRE CURRENT TIME t

**S32** — CURRENT TIME t SATISFIES t1<t<t2? — NO / YES

**S2** — CALCULATE AIR SPRING DISPLACEMENT ESTIMATION VALUES ΔXc BASED ON VEHICLE MODEL

**S3** — CALCULATE AIR SPRING DISPLACEMENTS ΔX FROM PRESSURE RECEIVING AREAS AND SPRING CONSTANTS

**S4** — COMPARE AIR SPRING DISPLACEMENTS ΔX AND ΔXc WITH EACH OTHER IN DAMPER ABNORMALITY DETERMINATION UNIT — YES (EQUAL TO OR MORE THAN THRESHOLD VALUE) / NO (LESS THAN THRESHOLD VALUE)

**S5** — DETERMINE THAT DAMPERS ARE NORMAL

**S7** — DETERMINE THAT DAMPERS ARE ABNORMAL

**S6** — NOTIFY THAT DAMPERS ARE NORMAL

**S8** — NOTIFY THAT DAMPERS ARE ABNORMAL

END

EP 4 105 098 B1

## Fig. 7

START

ACQUIRE INFORMATION
FROM HIGHER-LEVEL
SIGNALS  —S1

CURRENT POSITION L
SATISFIES L1<L<L2?  —S21 — NO

YES

TRAVEL SPEED V
SATISFIES V1<V<V2?  —S22 — NO

YES

ACQUIRE CURRENT TIME t  —S31

CURRENT TIME t
SATISFIES t1<t<t2?  —S32 — NO

YES

INTERNAL PRESSURE P
OF AIR SPRING
SATISFIES P1<P<P2?  —S41 — NO

YES

CALCULATE AIR SPRING
DISPLACEMENT ESTIMATION
VALUES ΔXc BASED ON
VEHICLE MODEL  —S2

CALCULATE AIR SPRING
DISPLACEMENTS ΔX FROM
PRESSURE RECEIVING AREAS
AND SPRING CONSTANTS  —S3

COMPARE AIR SPRING DISPLACEMENTS
ΔX AND ΔXc WITH EACH OTHER IN DAMPER
ABNORMALITY DETERMINATION UNIT  —S4

YES
(EQUAL TO OR MORE THAN THRESHOLD VALUE)

NO
(LESS THAN THRESHOLD VALUE)

DETERMINE THAT
DAMPERS ARE NORMAL  —S5

DETERMINE THAT
DAMPERS ARE ABNORMAL  —S7

NOTIFY THAT
DAMPERS ARE NORMAL  —S6

NOTIFY THAT
DAMPERS ARE ABNORMAL  —S8

END

EP 4 105 098 B1

Fig. 8

START

S1 — ACQUIRE INFORMATION FROM HIGHER-LEVEL SIGNALS

S21 — CURRENT POSITION L SATISFIES L1<L<L2?
NO / YES

S22 — TRAVEL SPEED V SATISFIES V1<V<V2?
NO / YES

S31 — ACQUIRE CURRENT TIME t

S32 — CURRENT TIME t SATISFIES t1<t<t2?
NO / YES

S41 — INTERNAL PRESSURE P OF AIR SPRING SATISFIES P1<P<P2?
NO / YES

S51 — TRAVEL DIRECTION IS INBOUND?
NO / YES

S2 — CALCULATE AIR SPRING DISPLACEMENT ESTIMATION VALUES ΔXc BASED ON VEHICLE MODEL

S3 — CALCULATE AIR SPRING DISPLACEMENTS ΔX FROM PRESSURE RECEIVING AREAS AND SPRING CONSTANTS

S4 — COMPARE AIR SPRING DISPLACEMENTS ΔX AND ΔXc WITH EACH OTHER IN DAMPER ABNORMALITY DETERMINATION UNIT

NO (LESS THAN THRESHOLD VALUE)

YES (EQUAL TO OR MORE THAN THRESHOLD VALUE)

S5 — DETERMINE THAT DAMPERS ARE NORMAL

S6 — NOTIFY THAT DAMPERS ARE NORMAL

S7 — DETERMINE THAT DAMPERS ARE ABNORMAL

S8 — NOTIFY THAT DAMPERS ARE ABNORMAL

END

33

# Fig. 9

START

S1 — ACQUIRE INFORMATION FROM HIGHER-LEVEL SIGNALS

S61 — CURRENT POSITION L SATISFIES L3<L<L4? — NO / YES

S62 — TRAVEL SPEED V SATISFIES V3<V<V4? — NO / YES

S31 — ACQUIRE CURRENT TIME t

S63 — CURRENT TIME t SATISFIES t3<t<t4? — NO / YES

S64 — INTERNAL PRESSURE P OF AIR SPRING SATISFIES P3<P<P4? — NO / YES

S65 — TRAVEL DIRECTION IS OUTBOUND? — NO / YES

S2 — CALCULATE AIR SPRING DISPLACEMENT ESTIMATION VALUES ΔXc BASED ON VEHICLE MODEL

S3 — CALCULATE AIR SPRING DISPLACEMENTS ΔX FROM PRESSURE RECEIVING AREAS AND SPRING CONSTANTS

S4 — COMPARE AIR SPRING DISPLACEMENTS ΔX AND ΔXc WITH EACH OTHER IN DAMPER ABNORMALITY DETERMINATION UNIT

YES (EQUAL TO OR MORE THAN THRESHOLD VALUE)

NO (LESS THAN THRESHOLD VALUE)

S7 — DETERMINE THAT DAMPERS ARE ABNORMAL

S8 — NOTIFY THAT DAMPERS ARE ABNORMAL

S5 — DETERMINE THAT DAMPERS ARE NORMAL

S6 — NOTIFY THAT DAMPERS ARE NORMAL

END

# Fig. 10

EP 4 105 098 B1

Fig. 11

EP 4 105 098 B1

## Fig. 12

EP 4 105 098 B1

# Fig. 13

```
              ┌─────────────┐
              │    START    │
              └──────┬──────┘
                     │              S11
        ┌────────────┴────────────┐
        │   ACQUIRE INFORMATION   │
        │     FROM HIGHER-LEVEL   │
        │         SIGNALS         │
        └────────────┬────────────┘
                     │              S12
        ┌────────────┴────────────┐
        │  CALCULATE VEHICLE BODY │
        │   VERTICAL ACCELERATION │
        │    ESTIMATION VALUES Gc  │
        │  BASED ON VEHICLE MODEL │
        └────────────┬────────────┘
                     │              S13
        ┌────────────┴────────────┐
        │  ACQUIRE ACTUAL VERTICAL │
        │     ACCELERATIONS Gr     │
        └────────────┬────────────┘
                     │              S14        YES
        ╱────────────┴────────────╲   (EQUAL TO OR MORE THAN THRESHOLD VALUE)
       ╱  COMPARE ACCELERATIONS    ╲──────────────────────────────────┐
       ╲ Gr AND Gc WITH EACH OTHER IN DAMPER                           │
        ╲ ABNORMALITY DETERMINATION UNIT ╱                             │
          NO                                                           │
     (LESS THAN                                                        │
   THRESHOLD VALUE)         S5                                    S7    │
        ┌────────────┴────────────┐        ┌────────────────────┴──────┐
        │     DETERMINE THAT       │        │    DETERMINE THAT          │
        │  DAMPERS ARE NORMAL      │        │  DAMPERS ARE ABNORMAL      │
        └────────────┬────────────┘        └────────────────┬──────────┘
                     │              S6                       │      S8
        ┌────────────┴────────────┐        ┌────────────────┴──────────┐
        │      NOTIFY THAT         │        │     NOTIFY THAT            │
        │  DAMPERS ARE NORMAL      │        │  DAMPERS ARE ABNORMAL      │
        └────────────┬────────────┘        └────────────────┬──────────┘
                     │                                       │
                     │◄──────────────────────────────────────┘
              ┌──────┴──────┐
              │     END     │
              └─────────────┘
```

## Fig. 14

START

**S11**
ACQUIRE INFORMATION
FROM HIGHER-LEVEL
SIGNALS

**S21**
CURRENT POSITION L
SATISFIES L1<L<L2? — NO

YES

**S22**
TRAVEL SPEED V
SATISFIES V1<V<V2? — NO

YES

**S12**
CALCULATE VEHICLE BODY
VERTICAL ACCELERATION
ESTIMATION VALUES Gc
BASED ON VEHICLE MODEL

**S13**
ACQUIRE ACTUAL VERTICAL
ACCELERATIONS Gr

**S14**
COMPARE ACCELERATIONS
Gr AND Gc WITH EACH OTHER IN DAMPER
ABNORMALITY DETERMINATION UNIT

YES
(EQUAL TO OR MORE THAN THRESHOLD VALUE)

NO
(LESS THAN
THRESHOLD VALUE)

**S5**
DETERMINE THAT
DAMPERS ARE NORMAL

**S7**
DETERMINE THAT
DAMPERS ARE ABNORMAL

**S6**
NOTIFY THAT
DAMPERS ARE NORMAL

**S8**
NOTIFY THAT
DAMPERS ARE ABNORMAL

END

# Fig. 15

```
        ┌─────────────┐
        │    START    │
        └──────┬──────┘
               │                                    ▲
               ▼                          S11        │
        ┌──────────────────────┐                     │
        │ ACQUIRE INFORMATION  │                     │
        │  FROM HIGHER-LEVEL   │                     │
        │      SIGNALS         │                     │
        └──────────┬───────────┘         S31         │
                   ▼                                 │
        ┌──────────────────────┐                     │
        │ ACQUIRE CURRENT TIME t│                    │
        └──────────┬───────────┘                     │
                   ▼                 S32             │
              ╱─────────────╲                        │
             ╱  CURRENT TIME t ╲       NO            │
             ╲  SATISFIES t1<t<t2? ╲───────────────┘
              ╲─────────────╱
                   │ YES
                   ▼                 S12
        ┌──────────────────────┐
        │ CALCULATE VEHICLE BODY│
        │ VERTICAL ACCELERATION │
        │  ESTIMATION VALUES Gc │
        │ BASED ON VEHICLE MODEL│
        └──────────┬───────────┘         S13
                   ▼
        ┌──────────────────────┐
        │ ACQUIRE ACTUAL VERTICAL│
        │   ACCELERATIONS Gr    │
        └──────────┬───────────┘
                   ▼                 S14
```

CURRENT TIME t SATISFIES $t1 < t < t2$?

CALCULATE VEHICLE BODY VERTICAL ACCELERATION ESTIMATION VALUES Gc BASED ON VEHICLE MODEL

ACQUIRE ACTUAL VERTICAL ACCELERATIONS Gr

COMPARE ACCELERATIONS Gr AND Gc WITH EACH OTHER IN DAMPER ABNORMALITY DETERMINATION UNIT

YES (EQUAL TO OR MORE THAN THRESHOLD VALUE)

NO (LESS THAN THRESHOLD VALUE)

S5 — DETERMINE THAT DAMPERS ARE NORMAL

S7 — DETERMINE THAT DAMPERS ARE ABNORMAL

S6 — NOTIFY THAT DAMPERS ARE NORMAL

S8 — NOTIFY THAT DAMPERS ARE ABNORMAL

END

## Fig. 16

START

**S11** ACQUIRE INFORMATION FROM HIGHER-LEVEL SIGNALS

**S21** CURRENT POSITION L SATISFIES L1<L<L2? — NO

YES

**S22** TRAVEL SPEED V SATISFIES V1<V<V2? — NO

YES

**S31** ACQUIRE CURRENT TIME t

**S32** CURRENT TIME t SATISFIES t1<t<t2? — NO

YES

**S12** CALCULATE VEHICLE BODY VERTICAL ACCELERATION ESTIMATION VALUES Gc BASED ON VEHICLE MODEL

**S13** ACQUIRE ACTUAL VERTICAL ACCELERATIONS Gr

**S14** COMPARE ACCELERATIONS Gr AND Gc WITH EACH OTHER IN DAMPER ABNORMALITY DETERMINATION UNIT

YES (EQUAL TO OR MORE THAN THRESHOLD VALUE)

NO (LESS THAN THRESHOLD VALUE)

**S5** DETERMINE THAT DAMPERS ARE NORMAL

**S7** DETERMINE THAT DAMPERS ARE ABNORMAL

**S6** NOTIFY THAT DAMPERS ARE NORMAL

**S8** NOTIFY THAT DAMPERS ARE ABNORMAL

END

EP 4 105 098 B1

Fig. 17

START

S11 ACQUIRE INFORMATION FROM HIGHER-LEVEL SIGNALS

S21 CURRENT POSITION L SATISFIES L1<L<L2? — NO
YES

S22 TRAVEL SPEED V SATISFIES V1<V<V2? — NO
YES

S31 ACQUIRE CURRENT TIME t

S32 CURRENT TIME t SATISFIES t1<t<t2? — NO
YES

S41 INTERNAL PRESSURE P OF AIR SPRING SATISFIES P1<P<P2? — NO
YES

S12 CALCULATE VEHICLE BODY VERTICAL ACCELERATION ESTIMATION VALUES Gc BASED ON VEHICLE MODEL

S13 ACQUIRE ACTUAL VERTICAL ACCELERATIONS Gr

S14 COMPARE ACCELERATIONS Gr AND Gc WITH EACH OTHER IN DAMPER ABNORMALITY DETERMINATION UNIT

YES (EQUAL TO OR MORE THAN THRESHOLD VALUE)

NO (LESS THAN THRESHOLD VALUE)

S5 DETERMINE THAT DAMPERS ARE NORMAL

S6 NOTIFY THAT DAMPERS ARE NORMAL

S7 DETERMINE THAT DAMPERS ARE ABNORMAL

S8 NOTIFY THAT DAMPERS ARE ABNORMAL

END

Fig. 18

START

S11 ACQUIRE INFORMATION FROM HIGHER-LEVEL SIGNALS

S21 CURRENT POSITION L SATISFIES L1<L<L2? — NO

YES

S22 TRAVEL SPEED V SATISFIES V1<V<V2? — NO

YES

S31 ACQUIRE CURRENT TIME t

S32 CURRENT TIME t SATISFIES t1<t<t2? — NO

YES

S41 INTERNAL PRESSURE P OF AIR SPRING SATISFIES P1<P<P2? — NO

YES

S51 TRAVEL DIRECTION IS INBOUND? — NO

YES

S12 CALCULATE VEHICLE BODY VERTICAL ACCELERATION ESTIMATION VALUES Gc BASED ON VEHICLE MODEL

S13 ACQUIRE ACTUAL VERTICAL ACCELERATIONS Gr

S14 COMPARE ACCELERATIONS Gr AND Gc WITH EACH OTHER IN DAMPER ABNORMALITY DETERMINATION UNIT

YES (EQUAL TO OR MORE THAN THRESHOLD VALUE)

NO (LESS THAN THRESHOLD VALUE)

S5 DETERMINE THAT DAMPERS ARE NORMAL

S7 DETERMINE THAT DAMPERS ARE ABNORMAL

S6 NOTIFY THAT DAMPERS ARE NORMAL

S8 NOTIFY THAT DAMPERS ARE ABNORMAL

END

## Fig. 19

START

↓

**S11**
ACQUIRE INFORMATION FROM HIGHER-LEVEL SIGNALS

↓

**S61** CURRENT POSITION L SATISFIES L3<L<L4? — NO

YES ↓

**S62** TRAVEL SPEED V SATISFIES V3<V<V4? — NO

YES ↓

**S31** ACQUIRE CURRENT TIME t

↓

**S63** CURRENT TIME t SATISFIES t3<t<t4? — NO

YES ↓

**S64** INTERNAL PRESSURE P OF AIR SPRING SATISFIES P3<P<P4? — NO

YES ↓

**S65** TRAVEL DIRECTION IS OUTBOUND? — NO

YES

↓

**S12** CALCULATE VEHICLE BODY VERTICAL ACCELERATION ESTIMATION VALUES Gc BASED ON VEHICLE MODEL

↓

**S13** ACQUIRE ACTUAL VERTICAL ACCELERATIONS Gr

↓

**S14** COMPARE ACCELERATIONS Gr AND Gc WITH EACH OTHER IN DAMPER ABNORMALITY DETERMINATION UNIT

— YES (EQUAL TO OR MORE THAN THRESHOLD VALUE)

NO (LESS THAN THRESHOLD VALUE)

↓

**S5** DETERMINE THAT DAMPERS ARE NORMAL

↓

**S6** NOTIFY THAT DAMPERS ARE NORMAL

**S7** DETERMINE THAT DAMPERS ARE ABNORMAL

↓

**S8** NOTIFY THAT DAMPERS ARE ABNORMAL

↓

END

EP 4 105 098 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014198522 A
- JP 2004170080 A
- JP 3779258 B
- JP 2019027874 A
- JP 2012111480 A
- JP 5662298 B
- JP 2005067276 A
- JP 2017144909 A
- CN 104155968 A
- JP 2020020837 A